# EUROPÄISCHE PATENTANMELDUNG

(11) **EP 4 792 658 A1**
(43) Veröffentlichungstag der Anmeldung: **19.08.2026**
(21) Anmeldenummer: 25157299.6
(22) Anmeldetag: 12.02.2025
(51) Int. Cl.: A23L 15/00

(54) **FERMENTIERTES EIKLARPRODUKT MIT DESSERTARTIGEM CHARAKTER**

(71) Anmelder: OVOBEST Eiprodukte GmbH & Co. KG, 49434 Neuenkirchen-Vörden (DE); Hochschule Bremerhaven, 27568 Bremerhaven (DE); hebold systems GmbH, 27472 Cuxhaven (DE)
(72) Erfinder: Mannott, Insa, 26607 Aurich (DE); Bosse, Ramona, 27607 Geestland OT Langen (DE); Bosse, Gunnar, 27607 Geestland OT Langen (DE); Schneppe, Bernard, 49434 Neuenkirchen-Vörden (DE); Kiehne, Victoria, 49434 Neuenkirchen-Vörden (DE); Rehkamp, Anne, 49434 Neuenkirchen-Vörden (DE); Bertram, Clemens, 27472 Cuxhaven (DE)
(74) Vertreter: Eisenführ Speiser

(57) **Zusammenfassung**

Die vorliegende Erfindung betrifft eine Zusammensetzung bestehend aus oder umfassend fermentiertes Eiklar. Die vorliegende Erfindung betrifft außerdem ein Verfahren zur Herstellung einer Zusammensetzung bestehend aus oder umfassend fermentiertes Eiklar. Die vorliegende Erfindung betrifft auch eine Zusammensetzung bestehend aus oder umfassend fermentiertes Eiklar, welche nach dem erfindungsgemäßen Verfahren hergestellt oder herstellbar ist. Die vorliegende Erfindung betrifft zudem eine Lebensmittelzubereitung bestehend aus oder umfassend eine erfindungsgemäße Zusammensetzung sowie die Verwendung einer erfindungsgemäßen Zusammensetzung als Lebensmittelzubereitung.

## Beschreibung

### Technisches Gebiet

Die vorliegende Erfindung betrifft eine Zusammensetzung bestehend aus oder umfassend fermentiertes Eiklar. Die vorliegende Erfindung betrifft außerdem ein Verfahren zur Herstellung einer Zusammensetzung bestehend aus oder umfassend fermentiertes Eiklar. Die vorliegende Erfindung betrifft auch eine Zusammensetzung bestehend aus oder umfassend fermentiertes Eiklar, welche nach dem erfindungsgemäßen Verfahren hergestellt oder herstellbar ist. Die vorliegende Erfindung betrifft zudem eine Lebensmittelzubereitung bestehend aus oder umfassend eine erfindungsgemäße Zusammensetzung sowie die Verwendung einer erfindungsgemäßen Zusammensetzung als Lebensmittelzubereitung.

### Hintergrund der Erfindung

Bei der Herstellung und Entwicklung von Lebensmitteln sind die Verbesserung der Haltbarkeit sowie die Veredelung seit jeher angestrebte Ziele. Im Vergleich zu anderen Methoden zur Haltbarmachung von Lebensmitteln wie zum Beispiel Kühlen, Gefrieren, Einkochen, Trocknen (Dörren), Zuckern, Säuern, Einlegen, Pökeln oder Räuchern ist vor allem das Fermentieren seit langer Zeit ein sehr beliebtes und vorteilhaftes Verfahren, da es die Haltbarmachung ohne Strom und ohne die Einwirkung von Hitze ermöglicht und zudem die Ausbildung geschmacksveredelnder und gesundheitsfördernder Komponenten begünstigt und/oder erst ermöglicht.

Zu den bekanntesten Beispielen der Nutzung fermentativer Prozesse zu Haltbarmachung und Veredelung von Lebensmitteln gehören die Herstellung von Sauerkraut, Bier, Käse und Joghurt. Der Großteil der fermentativen Prozesse zur Haltbarmachung und/oder Veredelung von Lebensmitteln basiert auf der Umsetzung von Kohlenhydratquellen (z.B. Fructose, Glucose, Lactose, Maltose, Saccharose), meist durch Mikroorganismen (Hefen, Schimmel, Bakterien) zu Produkten wie beispielsweise Alkoholen und/oder organischen Säuren und/oder Aromakomponenten.

Die mikrobielle Fermentation bietet also die Möglichkeit, die Eigenschaften einer Vielzahl von Lebensmitteln gezielt zu verändern und zu beeinflussen. Somit kann die Fermentation also als umwandelnder Bioprozess durch mikrobielle Kulturen bzw. die durch mikrobielle Kulturen synthetisierten Enzyme zur Verlängerung der Haltbarkeit von pflanzlichen und tierischen Rohwaren eingesetzt werden sowie zur Veredelung einzelner oder mehrere Geschmacks- und Geruchskomponenten pflanzlicher und tierischer Rohwaren. Somit werden durch den (mikrobiellen) Fermentationsprozess die charakteristischen sensorischen und/oder ernährungsphysiologischen Eigenschaften der entsprechenden aus den pflanzlichen und/oder tierischen Rohwaren hergestellten Lebensmittel geprägt.

Innerhalb der tierischen Rohwaren stellen Eiprodukte eine besondere Herausforderung für mikrobielle Fermentationsprozesse dar. Ein Grund hierfür ist der Lysozymgehalt im Ei (vor allem im Eiklar). Lysozym liegt im Ei (vor allem im Eiklar) als aktives Enzym vor und besitzt antimikrobielle Eigenschaften, da es die glykosidischen Bindungen des Zellwandbestandteils Murein spaltet und dadurch Mikroorganismen, vor allem Bakterien, inaktiviert. Die mikrobiellen Eigenschaften des Lysozyms sind demnach besonders stark gegenüber grampositiven Bakterien ausgeprägt, welche gegenüber gramnegativen Bakterien über eine deutlich dickere Mureinschicht verfügen. Bereits bei Lysozymkonzentrationen von über 1µg/mL kann es zu einer Lyse der Zellwände von Bakterien kommen.

Die mikrobielle Fermentation von Eiprodukten wird somit erneut und in besonderem Maße erschwert, da für die Fermentation von Lebensmitteln vor allem die grampositive Gruppe der Milchsäurebakterien bevorzugt eingesetzt und als mikrobielle Fermentations- und Schutzkultur definiert wird. Innerhalb der Gruppe der Milchsäurebakterien können homo- und heterofermentative Spezies unterschieden werden, wobei diese Einteilung anhand der hauptsächlich gebildeten Gärungsprodukte erfolgt. Bei der homofermentativen Milchsäuregärung wird primär Milchsäure gebildet, während bei der heterofermentativen Milchsäuregärung neben Milchsäure auch Kohlenstoffdioxid und Ethanol gebildet werden. Innerhalb der Gruppe der homofermentativen Milchsäuregärer werden regelmäßig beispielsweise Spezies der Gattungen *Streptococcus* und *Lactobacillus* bei der Fermentation von Lebensmittelprodukten eingesetzt. Sowohl bei der homofermentativen als auch bei der heterofermentativen Milchsäuregärung können Laktose, Glucose und Fruktose von vielen Milchsäurebakterien direkt über die Glykolyse verwertet werden, wohingegen für Saccharose oder Galaktose die Verwertung über variierende Stoffwechselwege beschrieben ist.

Eiprodukte werden flüssig oder pulverförmig im Handel in drei Gruppen unterteilt angeboten: Eigelb, Eiklar und Vollei. Innerhalb des Volleis liegt das Verhältnis von Eiklar zu Eigelb bei etwa 3:2. Im Vergleich zum Eigelb stellt das Eiklar die komplexere Mischung aus vielen globulären und strukturbildenden Proteinen dar. Die Hauptfraktionen des Eiklars werden in Ovalbumin, Ovotransferrin, Ovomucoid und Lysozym unterteilt. Lysozym nimmt hierbei aufgrund seiner vorstehend beschriebenen antimikrobiellen Eigenschaften eine Sonderstellung ein. Für viele mikrobielle Fermentationsprozesse ist die Inaktivierung des im Eiklar enthaltenen Lysozyms deshalb ein wesentlicher Schritt. Die Inaktivierung des Lysozyms kann beispielsweise durch Erhitzen, Verdünnen und/oder über physikalische Methoden erreicht werden (vgl. insoweit z.B. CN110384191 und JP4614821B2).

Im Eiproduktebereich finden mikrobielle Kulturen bereits eine Anwendung für Fermentationsprozesse. Beispielsweise wird zur Vermeidung einer Bräunungsreaktion durch thermische Prozesse beim Trocknen die im Ei befindliche Glucose durch mikrobielle Enzyme abgebaut, sodass das Eiklar ohne Farbbeeinträchtigung getrocknet werden kann (vgl. insoweit Delves-Broughton, J. (2014), EGGS | Microbiology of Egg Products, In Encyclopedia of Food Microbiology (pp. 617-621), Elsevier: https://doi.orq/10.1016/B978-0-12-384730-0.00090-2 und Froning, G. W. (2008), Egg Products Industry and Future Perspectives, In Y. Mine (Ed.), Egg Bioscience and Biotechnology (1st ed., 307-325). New York, NY: John Wiley & Sons.).

Eine Fermentation von Eiklarprodukten zur Herstellung einer Lebensmittelzubereitung für den Endkonsumenten mit einem leicht säuerlichen Geschmack und einer cremigen bis schaumartigen Konsistenz konnte bisher nicht zur Verfügung gestellt werden.

In EP2926674B1 wird ein Verfahren zur Herstellung eines Lebensmittels auf Basis von Eiklar beschrieben. Das dort beschriebene Verfahren zeichnet sich dadurch aus, dass das hergestellte Lebensmittel olfaktorisch, sensorisch und vom Mundgefühl her für den direkten Verzehr akzeptabel ist und insbesondere keinen Eigeschmack oder Eigeruch aufweist und in flüssiger Form nicht schleimig ist.

In KR20090026849A wird ein effizientes Herstellungsverfahren für Milchsäurebakteriengetränke unter Verwendung von Eiern beschrieben. Dabei wird ein Vollei (Eigelb und Eiklar) mit einer Mischung aus Milchsäurebakterien (*Lactobacillus adophyllus*, *Lactobacillus acidophilus, Bifidobacterium longum* und *Streptococcus thermophilus*) fermentiert. Es wird ein flüssiges Getränk hergestellt.

CN107535775A offenbart ein biotechnologisches Verfahren zur Verarbeitung von Eigetränken.

CN110384191A offenbart eine Methode zur Herstellung eines fettfreien, cholesterinfreien fermentierten Getränkes auf Basis Eiklar.

JP4614821B2 offenbart ein geschmacksverbesserndes Material bzw. eine geschmacksverbessernde Zutat aus milchsäurefermentiertem Eiklar unter Zusatz von Eigelb.

KR20190088770 offenbart ein Verfahren zur Herstellung von Joghurt unter Verwendung von Eiklar inklusive Milchproteinen.

CN111067035A offenbart eine Methode zur Herstellung eines Eiklar-Peptid-Puddings mit Probiotika.

Die Auswahl der Fermentationskulturen in Kombination mit den jeweilig zur Verfügung stehenden Kohlenhydratquellen ist dabei entscheidend für die sensorischen und mikrobiologischen Eigenschaften des fermentierten Eiklarproduktes. Bekannt ist beispielsweise die Verwendung von Saccharose, Glucose und Fructose als Kohlenhydratquellen (vgl. insoweit z.B. KR20190088770, CN111067035A, JP4614821B2).

Neben der Fermentation spielt auch die Texturierung, also die Beeinflussung der mechanischen und physikalischen Eigenschaften des Produktes eine wichtige Rolle. Möglichkeiten zur gezielten Beeinflussung der mechanischen und physikalischen Eigenschaften von Eiklar können unter anderem durch Hitze oder pH-Wert-Änderungen bewirkt werden. Beispielsweise haben Studien gezeigt, dass sowohl der pH als auch die Temperatur die Gelbildung von Eiklar stark beeinflussen. So wird die Wasserhaltekapazität von Eiklargelen bei pH 5 und pH 7 sehr stak durch Protein-Protein-Wechselwirkungen überlagert (Formierung von Proteinaggregaten), sodass weniger Wasser gehalten werden kann (vgl. insoweit z.B. Anton, M., Nau, F., & Guérin-Dubiard, C. (2011), Bioactive fractions of eggs for human and animal health, In Improving the Safety and Quality of Eggs and Egg Products (pp. 321-345), Elsevier: https://doi.orq/10.1533/9780857093929.3.321 und Handa, A., Takahashi, K., Kuroda, N., & Froning, G. W. (1998), Heat-induced Egg White Gels as Affected by pH. Journal of Food Science, (63/3), 403-407 und Houska, M., Kyhos, K., Novotna, P., Landfeld, A., & Strohalm, J. (2004), Gel Strength of the Native Egg White. Czech Journal of Food Science. (22), 58-66). Zur Herstellung eines Ei-Joghurts wurde der Einsatz unterschiedlicher Hydrokolloide (Xanthan, Curdlan, Agar, Natrum Alginat und Carrageenan) zur Texturbildung beschrieben (vgl. CN111067035A).

Nichtsdestotrotz gibt es noch immer zahlreiche Herausforderungen, die es bei der mikrobiellen Fermentation von Eiprodukten zu überwinden gilt. Dementsprechend hoch ist das Optimierungspotenzial bei den entsprechenden Fermentationsprozessen und den durch diese Prozesse hergestellten Produkten.

Beispielsweise ist es nach wie vor eine große Herausforderung bei der Fermentation von Eiprodukten, den starken Eigengeschmack und -geruch der Rohware zu modifizieren, zu reduzieren oder gar gänzlich zu entfernen.

In diesem Zusammenhang ist es ebenso eine Herausforderung, den aufgrund des Salzgehalts im Eiklar auftretenden Geschmack und Geruch zu modifizieren, zu reduzieren oder gar gänzlich zu entfernen.

Außerdem ist die Entstehung eines oder mehrerer sogenannter Off-Flavors bei der Durchführung mikrobieller Fermentationsprozesse ein Problem, wobei Off-Flavors Aromafehler oder Fehlaromen sind, die eine Abweichung eines Aromas von dem typischerweise erwarteten Aroma darstellen.

Darüber hinaus ist es eine Herausforderung bei der Texturierung von (mikrobiell) fermentierten Eiprodukten, eine angenehme gelartige, cremige, schaumige und/oder löffelbare Textur zu gewährleisten, ohne dass dabei grießige Proteinaggregate entstehen, die wiederum eine schleimige Textur zur Folge hätten.

Außerdem ist es eine Herausforderung bei der Texturierung von (mikrobiell) fermentierten Eiprodukten, in dem entsprechenden Produkt eine ansprechende, cremig weiße bis gelbliche Farbe als Basis des finalen Produktes zu erreichen, wobei auf den Einsatz von Farbstoffen verzichtet werden soll.

Es ist außerdem eine Herausforderung bei der Herstellung (mikrobiell) fermentierter und vorzugsweise auch texturierter Produkte aus Ei (Vollei und/oder Eigelb und/oder Eiklar), ein möglichst proteinreiches und vorzugsweise gleichzeitig texturell ansprechendes Produkt zu erzeugen. Vor allem die stetig steigende Nachfrage vor dem Hintergrund des zunehmenden Gesundheits- und Fitnessbewusstseins in der Bevölkerung nach proteinreichen und insgesamt gesunden und natürlichen Produkten bedingt einen großen Bedarf an neuen und verbesserten Produkten in diesem Bereich.

Der vorliegenden Erfindung liegen demnach zahlreiche, anspruchsvolle Aufgaben zugrunde, wobei die einzelnen Aufgaben sowohl einzeln auch in Kombination miteinander, vorzugsweise in Kombination miteinander, gelöst werden können.

Es war unter anderem eine Aufgabe der vorliegenden Erfindung, eine Zusammensetzung bestehend aus oder umfassend fermentiertes Eiklar bereitzustellen, welche einen vergleichsweise hohen Proteingehalt mit einer oder mehreren texturell ansprechende(n) Eigenschaft(en) kombiniert.

Es war außerdem eine Aufgabe der vorliegenden Erfindung, eine Zusammensetzung bestehend aus oder umfassend fermentiertes Eiklar bereitzustellen, welche sich durch eine vergleichsweise lange Haltbarkeit auszeichnet, vor allem bei gekühlter Lagerung bei Temperaturen im Bereich von 4 bis 10 °C.

Es war außerdem eine Aufgabe der vorliegenden Erfindung, eine Zusammensetzung bestehend aus oder umfassend fermentiertes Eiklar bereitzustellen, welche sich durch einen angenehmen Geschmack auszeichnet, der nicht an den typischen Eigengeschmack von Eiern erinnert.

Es war außerdem eine Aufgabe der vorliegenden Erfindung, eine Zusammensetzung bestehend aus oder umfassend fermentiertes Eiklar bereitzustellen, welche sich durch einen angenehmen Geruch auszeichnet, der nicht an den typischen Eigengeruch von Eiern erinnert.

Es war außerdem eine Aufgabe der vorliegenden Erfindung, eine Zusammensetzung bestehend aus oder umfassend fermentiertes Eiklar bereitzustellen, welche sich dadurch auszeichnet, dass sie neben den erwünschten und angestrebten Aromen ein möglichst geringes Maß an, vorzugsweise keine, Off-Flavors aufweist.

Es war außerdem eine Aufgabe der vorliegenden Erfindung, eine Zusammensetzung bestehend aus oder umfassend fermentiertes Eiklar bereitzustellen, welche frei von Farbstoffen ist und sich dabei vorzugsweise durch eine ansprechende Farbe auszeichnet.

Es war überdies eine Aufgabe der vorliegenden Erfindung, ein Verfahren zur Herstellung einer Zusammensetzung bestehend aus oder umfassend fermentiertes Eiklar bereitzustellen, wobei die durch das Verfahren hergestellte oder herstellbare Zusammensetzung sich durch einen vergleichsweise hohen Proteingehalt auszeichnet, wobei der Proteingehalt der Zusammensetzung vorzugsweise mindestens dem natürlichen durchschnittlichen Proteingehalt von Hühnereiern entsprechen sollte und diesen besonders bevorzugt sogar überschreiten sollte.

Es war außerdem eine Aufgabe der vorliegenden Erfindung, ein Verfahren zur Herstellung einer Zusammensetzung bestehend aus oder umfassend fermentiertes Eiklar bereitzustellen, das möglichst kosteneffizient durchgeführt werden kann.

Es war unter anderem eine Aufgabe der vorliegenden Erfindung, ein Verfahren zur Herstellung einer Zusammensetzung bestehend aus oder umfassend fermentiertes Eiklar bereitzustellen, das möglichst energieeffizient durchgeführt werden kann.

Es war unter anderem eine Aufgabe der vorliegenden Erfindung, ein Verfahren zur Herstellung einer Zusammensetzung bestehend aus oder umfassend fermentiertes Eiklar bereitzustellen, das möglichst zeiteffizient durchgeführt werden kann.

Es war unter anderem eine Aufgabe der vorliegenden Erfindung, ein Verfahren zur Herstellung einer Zusammensetzung bestehend aus oder umfassend fermentiertes Eiklar bereitzustellen, das möglichst nachhaltig durchgeführt werden kann.

Es war unter anderem eine Aufgabe der vorliegenden Erfindung, ein Verfahren zur Herstellung einer Zusammensetzung bestehend aus oder umfassend fermentiertes Eiklar bereitzustellen, das eine möglichst schonende Verarbeitung des Ausgangsmaterials, vor allem des Eiklars und/oder der eingesetzten mikrobiellen Kulturen erlaubt.

Es war darüber hinaus eine Aufgabe der vorliegenden Erfindung, eine Lebensmittelzubereitung bestehend aus oder umfassend fermentiertes Eiklar bereitzustellen, welche sich dadurch auszeichnet, dass sie zu einem möglichst großen Teil, vorzugsweise vollständig, aus natürlich vorkommenden Zutaten besteht.

Es war darüber hinaus eine Aufgabe der vorliegenden Erfindung, eine Lebensmittelzubereitung bestehend aus oder umfassend fermentiertes Eiklar bereitzustellen, welche sich dadurch auszeichnet, dass sie keine Farbstoffe enthält.

Es war darüber hinaus eine Aufgabe der vorliegenden Erfindung, eine Lebensmittelzubereitung bestehend aus oder umfassend fermentiertes Eiklar bereitzustellen, welche sich dadurch auszeichnet, dass sie für Menschen mit Laktoseintoleranz zum Verzehr geeignet ist.

Es war darüber hinaus eine Aufgabe der vorliegenden Erfindung, eine Lebensmittelzubereitung bestehend aus oder umfassend fermentiertes Eiklar bereitzustellen, welche sich durch eine oder mehrere texturell ansprechende Eigenschaften auszeichnet.

Es war darüber hinaus eine Aufgabe der vorliegenden Erfindung, eine Lebensmittelzubereitung bestehend aus oder umfassend fermentiertes Eiklar bereitzustellen, welche sich dadurch auszeichnet, dass sie über eine vergleichsweise lange Haltbarkeit verfügt.

### Beschreibung der Erfindung

Die vorliegende Erfindung betrifft in einem ersten Aspekt eine Zusammensetzung bestehend aus oder umfassend fermentiertes Eiklar, dadurch gekennzeichnet, dass die Zusammensetzung
- einen Proteingehalt im Bereich von 2 bis 20 Gew.-%, bezogen auf die Gesamtmasse der Zusammensetzung, sowie
- eine Viskosität im Bereich von 5 bis 4*10⁵ mPas und/oder
- eine gelartige und/oder cremige und/oder schaumige und/oder löffelbare Konsistenz
aufweist.

Die Begriffe "Fermentation" oder "fermentieren" wie hierin verwendet haben die dem Fachmann geläufige Bedeutung gemäß dem allgemeinen Fachwissen. Vorzugsweise beziehen sich diese Begriffe auf die mikrobielle und/oder enzymatische Umwandlung organischer Stoffe in eine oder mehrere Säure(n) und/oder ein oder mehrere Gas(e) und/oder einen oder mehrere Alkohol(e) sowie weitere sekundäre Metabolite. Vorzugsweise beziehen sich die Begriffe "Fermentation" oder "fermentieren" wie hierin verwendet sowohl auf anaerobe als auch auf aerobe Vorgänge. Vorzugsweise umfassen die Begriffe "Fermentation" oder "fermentieren" wie hierin verwendet verschiedene Gärungstypen, wie zum Beispiel Milchsäuregärung, alkoholische Gärung, Buttersäuregärung, gemischte Säuregärung, Ameisensäuregärung, Homoacetatgärung, Propionsäuregärung und Aceton-Butanol-Ethanol-Gärung.

Der Begriff "Eiklar" wie hierin verwendet hat die dem Fachmann geläufige Bedeutung gemäß dem allgemeinen Fachwissen. Vorzugsweise bezieht sich der Begriff "Eiklar" wie hierin verwendet auf dünnflüssige und gallertartige Bestandteile um den Dotter (*Vitellus, Protolecith)* der Eier von Vögeln, besonders bevorzugt von Hühnern *(Gallus gallus domesticus,* auch *Gallus domesticus).* Vorzugsweise bezieht sich der Begriff "Eiklar" wie hierin verwendet auf eine wässrige, schwach gelbliche Flüssigkeit, die aus drei Schichten differierender Viskosität besteht, nämlich dem äußeren (dünnflüssigen) Eiklar, dem mittleren (gallertartigen) Eiklar sowie dem inneren (dünnflüssigen) Eiklar). Die Begriffe "Eiklar" und "Eiweiß" wie hierin verwendet sind Synonyme und können austauschbar verwendet werden.

Der Begriff "Proteingehalt" wie hierin verwendet hat die dem Fachmann geläufige Bedeutung gemäß dem allgemeinen Fachwissen. Vorzugsweise bezieht sich der Begriff "Proteingehalt" wie hierin verwendet auf die Gesamtmenge der in einer Zusammensetzung enthaltenen Menge an Aminosäuren und aus über Peptidbindungen miteinander verknüpften Aminosäuren aufgebaute Makromoleküle. Der Proteingehalt einer Zusammensetzung lässt sich quantitativ durch eine Vielzahl verschiedener Techniken bestimmen, die dem Fachmann bekannt sind. Diese Techniken umfassen beispielsweise die Absorptionsspektroskopie, also das Messen von Absorptionsspektren von Proteinlösungen, die Kjeldahlsche Stickstoffbestimmung (Kjehldahlometrie), kolorimetrische Tests (Kolorimetrie), wie beispielsweise die Bradford-Methode, die Biuret-Reaktion, den Bicinchoninsäure-Assay sowie die Lowry-Methode und dem Fachmann bekannte Abwandlungen und Weiterentwicklung der vorstehend genannten Methoden und Assays.

Der Begriff "Viskosität" wie hierin im Kontext der Konsistenz einer erfindungsgemäßen Zusammensetzung verwendet hat die dem Fachmann geläufige Bedeutung gemäß dem allgemeinen Fachwissen. Vorzugsweise bezeichnet der Begriff "Viskosität" wie hierin im Kontext der Konsistenz einer erfindungsgemäßen Zusammensetzung verwendet die Konsistenzfestigkeit einer Zusammensetzung.

Der Begriff "gelartig" wie hierin im Kontext der Konsistenz einer erfindungsgemäßen Zusammensetzung verwendet hat die dem Fachmann geläufige Bedeutung gemäß dem allgemeinen Fachwissen. Vorzugsweise bezieht sich der Begriff "gelartig" wie hierin im Kontext der Konsistenz einer erfindungsgemäßen Zusammensetzung verwendet auf eine Konsistenz, die durch Gelieren (auch Gelierung oder Gelation), also dem Vorgang der Bildung eines Gels (Vernetzen isolierter Bausteine zu einem viskoelastischen Netz), erzeugt wird.

Der Begriff "cremig" wie hierin im Kontext der Konsistenz einer erfindungsgemäßen Zusammensetzung verwendet hat die dem Fachmann geläufige Bedeutung gemäß dem allgemeinen Fachwissen. Vorzugsweise bezieht sich der Begriff "cremig" wie hierin im Kontext der Konsistenz einer erfindungsgemäßen Zusammensetzung verwendet auf eine Konsistenz, die der einer Creme und/oder der von geschlagener Sahne entspricht oder ähnelt.

Der Begriff "schaumig" wie hierin im Kontext der Konsistenz einer erfindungsgemäßen Zusammensetzung verwendet hat die dem Fachmann geläufige Bedeutung gemäß dem allgemeinen Fachwissen. Vorzugsweise bezieht sich der Begriff "schaumig" wie hierin im Kontext der Konsistenz einer erfindungsgemäßen Zusammensetzung verwendet auf eine Konsistenz, die der von flüssigen Schaumwänden, also von flüssigen Wänden (bestehend aus oder umfassend Tenside/n und Wasser) eingeschlossenen gasförmigen Bläschen, entspricht oder ähnelt.

Der Begriff "löffelbar" wie hierin im Kontext der Konsistenz einer erfindungsgemäßen Zusammensetzung verwendet hat die dem Fachmann geläufige Bedeutung gemäß dem allgemeinen Fachwissen. Vorzugsweise bezieht sich der Begriff "löffelbar" wie hierin im Kontext der Konsistenz einer erfindungsgemäßen Zusammensetzung verwendet auf eine Konsistenz, die es erlaubt, die erfindungsgemäße Zusammensetzung mit einem handelsüblichen Speiselöffel ohne Zuhilfenahme weiterer Hilfsmittel zu portionieren und zu verzehren.

Eine Zusammensetzung gemäß der vorliegenden Erfindung zeichnet sich dadurch aus, dass sie aus fermentiertem Eiklar besteht oder dieses umfasst und zugleich einen vergleichsweise hohen Proteingehalt mit einer oder mehreren texturell ansprechende(n) Eigenschaft(en) kombiniert.

Eine Zusammensetzung gemäß der vorliegenden Erfindung zeichnet sich dadurch aus, dass der vergleichsweise hohe Proteingehalt vorzugsweise lediglich durch den Proteingehalt des fermentierten Eiklars zustande kommt.

Vorzugsweise ist die Zusammensetzung gemäß der vorliegenden Erfindung dadurch gekennzeichnet, dass sie einen Proteingehalt im Bereich von 2 bis 20 Gew.-%, vorzugsweise 4 bis 18 Gew.-%, vorzugsweise 6 bis 17 Gew.-%, vorzugsweise von 8 bis 16 Gew.-%, besonders vorzugsweise von 9 bis 15 Gew.-%, jeweils bezogen auf die Gesamtmasse der Zusammensetzung, aufweist.

Vorzugsweise ist die Zusammensetzung gemäß der vorliegenden Erfindung dadurch gekennzeichnet, dass sie eine Viskosität im Bereich von 5 bis 4*10⁵ mPas, vorzugsweise im Bereich von 50 bis 4*10⁵ mPas, vorzugsweise im Bereich von 100 bis 4*10⁵ mPas, vorzugsweise im Bereich von 300 bis 4*10⁵ mPas, aufweist.

Vorzugsweise ist die Zusammensetzung gemäß der vorliegenden Erfindung dadurch gekennzeichnet, dass das zu ihrer Herstellung verwendete Eiklar frisches Eiklar ist, welches aus Eiern von Haushühnern *(Gallus gallus domesticus,* auch *Gallus domesticus)* gewonnen wurde, welche in einer der folgenden Haltungsformen gehalten wurden: Kleingruppenhaltung bzw. Käfighaltung, Bodenhaltung, Freilandhaltung oder Biohaltung, vorzugsweise Freilandhaltung oder Biohaltung, besonders vorzugsweise Biohaltung.

Eine bevorzugte Ausführungsform der Zusammensetzung gemäß der vorliegenden Erfindung umfasst fermentiertes Eiklar und weist
- einen Proteingehalt im Bereich von 2 bis 20 Gew.-%, vorzugsweise 4 bis 18 Gew.-%, vorzugsweise 6 bis 17 Gew.-%, vorzugsweise von 8 bis 16 Gew.-%, besonders vorzugsweise von 9 bis 15 Gew.-%, jeweils bezogen auf die Gesamtmasse der Zusammensetzung, sowie
- eine Viskosität im Bereich von 5 bis 4*10⁵ mPas, vorzugsweise im Bereich von 6 bis 3*10⁵ mPas, vorzugsweise im Bereich von 7 bis 2*10⁵ mPas, vorzugsweise im Bereich von 8 bis 10⁵ mPas, sowie
- eine gelartige und/oder cremige und/oder schaumige und/oder löffelbare Konsistenz
auf.

Vorzugsweise weist die erfindungsgemäße Zusammensetzung einen pH im Bereich von 4,0 bis 6,0, vorzugsweise von 4,1 bis 5,0 auf.

Aufgrund dieses pH zeichnet sich die Zusammensetzung gemäß der vorliegenden Erfindung durch einen angenehmen, leicht sauren, vorzugsweise frischen bis joghurtartigen und/oder fermentierten, Geschmack aus.

Eine bevorzugte Ausführungsform der Zusammensetzung gemäß der vorliegenden Erfindung umfasst fermentiertes Eiklar und weist
- einen Proteingehalt im Bereich von 2 bis 20 Gew.-%, vorzugsweise 4 bis 18 Gew.-%, vorzugsweise 6 bis 17 Gew.-%, vorzugsweise von 8 bis 16 Gew.-%, besonders vorzugsweise von 9 bis 15 Gew.-%, jeweils bezogen auf die Gesamtmasse der Zusammensetzung, sowie
- eine Viskosität im Bereich von 5 bis 4*10⁵ mPas, vorzugsweise im Bereich von 6 bis 3*10⁵ mPas, vorzugsweise im Bereich von 7 bis 2*10⁵ mPas, vorzugsweise im Bereich von 8 bis 10⁵ mPas, sowie
- eine gelartige und/oder cremige und/oder schaumige und/oder löffelbare Konsistenz, sowie
- einen pH im Bereich von 4,0 bis 6,0, vorzugsweise von 4,1 bis 5,0
auf.

Es wurde gefunden, dass die Zusammensetzung gemäß der vorliegenden Erfindung sich aufgrund der Kombination des erfindungsgemäßen Bereichs für den pH mit dem erfindungsgemäßen Bereich für die Viskosität durch einen angenehmen, leicht sauren, vorzugsweise frischen bis joghurtartigen und/oder fermentierten Geschmack in Kombination mit einer oder mehreren texturell ansprechenden Eigenschaft(en) auszeichnet und diese vorteilhaften Eigenschaften wiederum mit einem vergleichsweise hohen Proteingehalt kombiniert.

Vorzugsweise umfasst die erfindungsgemäße Zusammensetzung keine Milchsäurebakterien, die nicht der Gattung *Streptococcus* oder der Gattung *Lactobacillus* zugehörig sind, vorzugsweise keine Milchsäurebakterien, die nicht ausgewählt sind aus der Gruppe bestehend aus *Streptococcus thermophilus, Lactobacillus plantarum, Lactobacillus rhamnosus* und *Lactobacillus paracasei.*

Der Begriff "Milchsäurebakterien" wie hierin verwendet hat die dem Fachmann aufgrund seines allgemeinen Fachwissens geläufige Bedeutung. Vorzugsweise bezieht sich der Begriff "Milchsäurebakterien" wie hierin verwendet auf sämtliche Vertreter der bakteriellen Ordnung *Lactobacillales* (Laktobakterien), welche sich dadurch auszeichnen, dass sie obligat anaerob, aber meist aerotolerant und grampositiv sind.

Vorzugsweise umfasst die erfindungsgemäße Zusammensetzung keine lebenden bzw. aktiven Milchsäurebakterien und auch keine molekularen Überreste von Milchsäurebakterien, die nicht der Gattung *Streptococcus* oder der Gattung *Lactobacillus* zugehörig sind, vorzugsweise keine Milchsäurebakterien, die nicht ausgewählt sind aus der Gruppe bestehend aus *Streptococcus thermophilus, Lactobacillus plantarum, Lactobacillus rhamnosus* und *Lactobacillus paracasei.*

Es wurde gefunden, dass dadurch, dass die erfindungsgemäße Zusammensetzung keine Milchsäurebakterien, die nicht der Gattung *Streptococcus* oder der Gattung *Lactobacillus* zugehörig sind, vorzugsweise keine Milchsäurebakterien, die nicht ausgewählt sind aus der Gruppe bestehend aus *Streptococcus thermophilus, Lactobacillus plantarum, Lactobacillus rhamnosus* und *Lactobacillus paracasei* umfasst die erfindungsgemäße Zusammensetzung besonders kosteneffizient hergestellt werden kann. Dies wird unter anderem dadurch erreicht, dass sich die allenfalls in der erfindungsgemäßen Zusammensetzung enthaltenen Milchsäurebakterien gut an die Matrix Ei adaptieren können, da sie teilweise natürlicherweise in entsprechenden Eiern vorkommen. Außerdem wachsen die allenfalls in der erfindungsgemäßen Zusammensetzung enthaltenen Milchsäurebakterien mit einer vergleichsweise hohen Wachstumsrate und/oder zu einer vergleichsweise hohen Zelldichte.

Außerdem wurde gefunden, dass dadurch, dass die erfindungsgemäße Zusammensetzung keine Milchsäurebakterien, die nicht der Gattung *Streptococcus* oder der Gattung *Lactobacillus* zugehörig sind, vorzugsweise keine Milchsäurebakterien, die nicht ausgewählt sind aus der Gruppe bestehend aus *Streptococcus thermophilus, Lactobacillus plantarum, Lactobacillus rhamnosus* und *Lactobacillus paracasei* umfasst die erfindungsgemäße Zusammensetzung keine Toxine enthält und der menschliche Verzehr somit unbedenklich ist.

Außerdem wurde gefunden, dass dadurch, dass die erfindungsgemäße Zusammensetzung keine Milchsäurebakterien, die nicht der Gattung *Streptococcus* oder der Gattung *Lactobacillus* zugehörig sind, vorzugsweise keine Milchsäurebakterien, die nicht ausgewählt sind aus der Gruppe bestehend aus *Streptococcus thermophilus, Lactobacillus plantarum, Lactobacillus rhamnosus* und *Lactobacillus paracasei* umfasst die erfindungsgemäße Zusammensetzung aufgrund der geringen proteolytischen Aktivität der allenfalls vorhandenen Milchsäurebakterien einen vergleichsweise hohen Proteingehalt aufweist.

Außerdem wurde gefunden, dass dadurch, dass die erfindungsgemäße Zusammensetzung keine Milchsäurebakterien, die nicht der Gattung *Streptococcus* oder der Gattung *Lactobacillus* zugehörig sind, vorzugsweise keine Milchsäurebakterien, die nicht ausgewählt sind aus der Gruppe bestehend aus *Streptococcus thermophilus, Lactobacillus plantarum, Lactobacillus rhamnosus* und *Lactobacillus paracasei* umfasst die erfindungsgemäße Zusammensetzung flüchtige Aromakomponenten enthält, welche vom Endkunden und Konsumenten als angenehm empfunden werden.

Ein qualitativer und quantitativer Nachweis über das Vorhandensein bestimmter lebender bzw. aktiver Mikroorganismen kann durch verschiedene dem Fachmann aufgrund seines allgemeinen Fachwissens bekannte Methoden erfolgen. Beispielsweise lässt sich ein qualitativer und quantitativer (mit begrenzter Genauigkeit) Nachweis über das Vorhandensein bestimmter lebender bzw. aktiver Mikroorganismen in einer Zusammensetzung über eine Bestimmung der Lebendzellzahl bzw. der koloniebildenden Einheiten (CFU; colony forming units) unter Verwendung geeigneter Nährmedien erbringen. Dem Fachmann sind für diese Methode geeignete Nährmedien bekannt und er weiß, anhand welcher Kriterien er diese auszuwählen hat.

Ein qualitativer sowie ein qualitativer und quantitativer Nachweis über das Vorhandensein bestimmter lebender bzw. aktiver Mikroorganismen sowie über das Vorhandensein molekularer Überreste bestimmter Mikroorganismen, beispielsweise Milchsäurebakterien, kann durch verschiedene dem Fachmann aufgrund seines allgemeinen Fachwissens bekannte Methoden erfolgen. Beispielsweise lässt sich ein qualitativer Nachweis über das Vorhandensein lebender bzw. aktiver Mikroorganismen sowie über das Vorhandensein molekularer Überreste von bestimmten Mikroorganismen, beispielsweise Milchsäurebakterien, in einer Zusammensetzung mittels konventioneller PCR (polymerase chain reaction) unter Verwendung geeigneter spezifischer Primer erbringen. Ein qualitativer und quantitativer Nachweis über das Vorhandensein lebender bzw. aktiver Mikroorganismen sowie über das Vorhandensein molekularer Überreste bestimmter Mikroorganismen, beispielsweise Milchsäurebakterien, ließe sich beispielsweise mittels RT-qPCR (reversre transcription quantitative polymerase chain reaction) unter Verwendung geeigneter spezifischer Primer erbringen. Geeignete spezifische Primer für entsprechende Nachweise mittels PCR und/oder RT-qPCR wären beispielsweise solche, die an entsprechend spezifische Sequenzbereiche des Gens hybridisieren, welches für die 16S-rRNA codiert. Dem Fachmann ist bekannt, wie er entsprechende Primer zu designen hat. Ein qualitativer Nachweis über das Vorhandensein lebender bzw. aktiver Mikroorganismen sowie über das Vorhandensein molekularer Überreste bestimmter Mikroorganismen lässt sich alternativ oder zusätzlich auch mittels NGS (next generation sequencing) erbringen.

Die vorstehend beschriebenen Methoden zum Erbringen eines qualitativen und/oder quantitativen Nachweises über das Vorhandensein lebender bzw. aktiver Mikroorganismen und/oder über das Vorhandensein molekularer Überreste bestimmter Mikroorganismen können beliebig miteinander kombiniert werden, um so gegebenenfalls die Genauigkeit und/oder die Breite bzw. den Umfang des entsprechenden Nachweises zu verbessern bzw. zu erhöhen.

In einem weiteren Aspekt betrifft die vorliegende Erfindung ein Verfahren zur Herstellung einer Zusammensetzung (vorzugsweise wie vorstehend beschrieben, besonders vorzugsweise wie vorstehend als bevorzugt bezeichnet) bestehend aus oder umfassend fermentiertes Eiklar, vorzugsweise einer Zusammensetzung wie hierin beschrieben, umfassend die folgenden Schritte:
(a) Bereitstellen von Eiklar;
(b) Erhöhen des Trockenmassegehalts und/oder Einstellen des Salzgehalts des Eiklars, vorzugsweise mittels Ultrafiltration, sodass ein Trockenmassegehalt des Eiklars im Bereich von 5 bis 25 Gew.-% und/oder ein Salzgehalt des Eiklars im Bereich von 0,01 bis 0,45 Gew.-%, jeweils bezogen auf die Gesamtmasse des Eiklars, erreicht wird;
(c) optional: Einstellen
   des Trockenmassegehalts des Eiklars durch Hinzufügen einer Flüssigkeit, vorzugsweise Trinkwasser, auf einen Bereich von 5 bis 15 Gew.-%, bezogen auf die Gesamtmasse des Eiklars,
      und/oder
   des pH des Eiklars, vorzugsweise mit Zitronensäure, auf einen pH im Bereich von 5,5 bis 8,0;
(d) optional: Hinzufügen einer oder mehrerer Kohlenhydratquelle(n) zu dem Eiklar;
(e) optional: Reduktion der mikrobiologischen Belastung des Eiklars;
(f) Hinzufügen einer Fermentationskultur zum Eiklar;
(g) Fermentieren des Eiklars, sodass ein fermentiertes Eiklar entsteht;
(h) optional: Hinzufügen von einem oder mehreren weiteren Bestandteilen, vorzugsweise wobei eine Zusammensetzung wie oben beschrieben erhalten wird.

Vorzugsweise handelt es sich bei dem in Schritt (a) bereitgestellten Eiklar um frisches Eiklar, welches aus Eiern von Vögeln, vorzugsweise aus Eiern von Haushühnern *(Gallus gallus domesticus,* auch *Gallus domesticus)* gewonnen wurde. Vorzugsweise wird das in Schritt (a) bereitgestellte Eiklar durch das Öffnen der entsprechenden Eier und dem Abtrennen des darin enthaltenen Eigelbs (Dotter) hergestellt.

Vorzugsweise handelt es sich bei dem in Schritt (a) bereitgestellten Eiklar um frisches Eiklar, welches aus Eiern von Haushühnern *(Gallus gallus domesticus,* auch *Gallus domesticus)* gewonnen wurde, welche in einer der folgenden Haltungsformen gehalten wurden: Kleingruppenhaltung bzw. Käfighaltung (Haltungsform 3), Bodenhaltung (Haltungsform 2), Freilandhaltung (Haltungsform 1) oder Biohaltung (Haltungsform 0), vorzugsweise Freilandhaltung oder Biohaltung, besonders vorzugsweise Biohaltung.

Vorzugsweise handelt es sich bei dem in Schritt (a) bereitgestellten Eiklar nicht um rekonstituiertes bzw. rehydriertes Eiklar.

Der Begriff "Trockenmasse" wie hierin verwendet hat die dem Fachmann aufgrund seines allgemeinen Fachwissens geläufige übliche Bedeutung. Vorzugsweise bezieht sich der Begriff "Trockenmasse" wie hierin verwendet auf die Masse desjenigen Bestandteils einer Zusammensetzung, der nach Abzug der Masse des in derselben Zusammensetzung enthaltenen Wassers übrigbleibt. Dem Fachmann sind Methoden zur Bestimmung des Trockenmassegehalts einer Zusammensetzung aufgrund seines allgemeinen Fachwissens bekannt und er kann diese Methoden routinemäßig durchführen. Beispielsweise lässt sich der Trockenmassegehalt einer Zusammensetzung durch differentielles Wiegen vor und nach dem Trocknen bis zur Gewichtskonstanz ermitteln.

Dem Fachmann sind außerdem Methoden zur Bestimmung des Salzgehalts einer Zusammensetzung aufgrund seines allgemeinen Fachwissens bekannt und er kann diese Methoden routinemäßig durchführen. Beispielsweise lässt sich der Salzgehalt einer Zusammensetzung durch Messen der Salinität einer Zusammensetzung bestimmen. Eine solche Salinitätsmessung kann beispielsweise mittels eines Salinometers erfolgen, wobei die elektrische Leitfähigkeit einer Zusammensetzung gemessen wird, welche proportional zum Salzgehalt der entsprechenden Zusammensetzung ist.

Vorzugsweise erfolgt das Erhöhen des Trockenmassegehalts und/oder Einstellen des Salzgehalts des Eiklars in Schritt (b) mittels Ultrafiltration durch eine Membran, wobei ein Überströmungsprofil im Bereich von 1000 bis 3000 I/h, vorzugsweise im Bereich von 1500 bis 2500 l/h, besonders vorzugsweise im Bereich von 1800 bis 2200 I/h verwendet wird.

Vorzugsweise erfolgt das Erhöhen des Trockenmassegehalts und/oder Einstellen des Salzgehalts des Eiklars in Schritt (b) mittels Ultrafiltration durch eine Membran, wobei ein Transmembrandruck im Bereich von 5 bis 20 bar, vorzugsweise im Bereich von 6 bis 18 bar, besonders vorzugsweise im Bereich von 7 bis 16 bar verwendet wird.

Es wurde gefunden, dass bei Verwendung des vorstehend beschriebenen Überströmungsprofils sowie bei Verwendung des vorstehend beschriebenen Transmembrandrucks bei der Ultrafiltration in Schritt (b) des Verfahrens gemäß der vorliegenden Erfindung eine besonders effiziente und selektive Abtrennung des im Eiklar enthaltenen Wassers möglich ist, welche zugleich für die übrigen Bestandteile des Eiklars sehr schonend ist, sodass die übrigen Bestandteile des Eiklars nicht in ihrer Struktur und Funktionalität beeinträchtigt werden und nur in geringem Maße (Proteinverlust von 0,5 Gew.-% oder weniger bezogen auf die im in Schritt (a) bereitgestellten Eiklar enthaltene Gesamtproteinmenge) bis gar nicht zusammen mit dem Wasser abgetrennt werden. Vor allem eine Kombination des vorstehend beschriebenen Überströmungsprofils mit dem vorstehend beschriebenen Transmembrandruck bei der Ultrafiltration in Schritt (b) des Verfahrens gemäß der vorliegenden Erfindung ermöglicht eine besonders effiziente und selektive und zugleich schonende Abtrennung des im Eiklar enthaltenen Wassers.

Vorzugsweise erfolgt das Erhöhen des Trockenmassegehalts und/oder Einstellen des Salzgehalts des Eiklars in Schritt (b) mittels Ultrafiltration durch eine Membran mit einer Abschlussgrenze im Bereich von 5 bis 200 kDa, vorzugsweise im Bereich von 10 bis 150 kDa, besonders vorzugsweise im Bereich von 10 bis 20 kDa.

Durch eine Kombination eines Transmembrandrucks im vorstehend beschriebenen Bereich mit einer Abschlussgrenze der bei der Ultrafiltration eingesetzten Membran im vorstehend beschriebenen Bereich ist es möglich, einen Permeatstrom bei der Ultrafiltration in Schritt (b) des erfindungsgemäßen Verfahrens zu erzeugen, der im Bereich von 800 bis 1500 I/h liegt. Dieser Bereich für den Permeatstrom hat sich insoweit als besonders vorteilhaft herausgestellt als der Proteingehalt des in Schritt (b) ultrafiltrierten Eiklars auf ≥ 20 Gew.-%, bezogen auf die Gesamtmasse des ultrafiltrierten Eiklars, erhöht werden kann und zeitgleich entweder gar kein oder nur ein sehr geringer Anteil der in dem in Schritt (a) bereitgestellten Eiklar enthaltenen Proteinmenge zusammen mit Wasser abgetrennt wird (Proteinverlust von 0,5 Gew.-% oder weniger bezogen auf die im in Schritt (a) bereitgestellten Eiklar enthaltene Gesamtproteinmenge).

Vorzugsweise wird während des Ultrafiltrierens in Schritt (b) des Verfahrens gemäß der vorliegenden Erfindung kontinuierlich Wasser zu dem Eiklar hinzugegeben. Dies ermöglicht, das logarithmische Auswaschen von Salz aus dem Eiklar ohne das effektive Abtrennen von Wasser, sodass der Salzgehalt im Eiklar verringert wird während der Protein- und Trockenmassegehalt des Eiklars unverändert bleiben.

Alternativ erfolgt die Ultrafiltration in Schritt (b) des Verfahrens gemäß der vorliegenden Erfindung stufenweise und es wird zwischen den einzelnen Stufen Wasser zu dem Eiklar hinzugegeben. Dadurch lässt sich die vorstehend beschriebene Abtrennung des Salzes bei gleichbleibendem Trockenmasse- und Proteingehalt deutlich beschleunigen.

Vorzugsweise wird der Trockenmassegehalt des Eiklars in Schritt (b) des Verfahrens gemäß der vorliegenden Erfindung derart erhöht, dass ein Trockenmassegehalt im Bereich von 5 bis 25 Gew.-%, vorzugsweise im Bereich von 6 bis 23 Gew.-%, vorzugsweise im Bereich von 8 bis 22 Gew.-%, besonders vorzugsweise im Bereich von 10 bis 20 Gew.-%, jeweils bezogen auf die Gesamtmasse des Eiklars, erreicht wird.

Alternativ oder zusätzlich wird vorzugsweise der Salzgehalt des Eiklars in Schritt (b) des Verfahrens gemäß der vorliegenden Erfindung derart erhöht, dass ein Salzgehalt im Bereich von 0,01 bis 0,45 Gew.-%, vorzugsweise im Bereich von 0,02 bis 0,4 Gew.-%, vorzugsweise im Bereich von 0,03 bis 0,35 Gew.-%, besonders vorzugsweise im Bereich von 0,05 bis 0,3 Gew.-%, jeweils bezogen auf die Gesamtmasse des Eiklars, erreicht wird.

Das Erhöhen des Trockenmassegehalts und/oder (vorzugsweise und) das Einstellen des Salzgehalts des in Schritt (b) ultrafiltrierten Eiklars auf den vorstehend jeweils beschriebenen Bereich ist vorteilhaft, da es dadurch möglich ist, in dem nachfolgenden (optionalen) Verfahrensschritt (c) sowohl den Trockenmassegehalt als auch den pH des für den nachfolgenden Fermentationsprozess einzusetzenden Eiklars für die jeweils für den Fermentationsprozess ausgewählten Mikroorganismen (Fermentations- und/oder Schutzkultur(en)) zu optimieren und fein einzustellen.

Vorzugsweise wird in dem Verfahren gemäß der vorliegenden Erfindung in einem Verfahrensschritt (c) der Trockenmassegehalts des Eiklars durch Hinzufügen einer Flüssigkeit, vorzugsweise Trinkwasser, auf einen Bereich von 5 bis 15 Gew.-%, vorzugsweise auf einen Bereich von 6 bis 12 Gew.-%, besonders vorzugsweise auf einen Bereich von 8 bis 10 Gew.-%, bezogen auf die Gesamtmasse des Eiklars, eingestellt.

Alternativ oder zusätzlich wird vorzugsweise in dem Verfahren gemäß der vorliegenden Erfindung in einem Verfahrensschritt (c) der pH des Eiklars, vorzugsweise mit Zitronensäure oder Phosphorsäure, besonders vorzugsweise mit Zitronensäure, auf einen pH im Bereich von 5,5 bis 8,0, vorzugsweise im Bereich von 6,0 bis 7,5, besonders vorzugsweise auf 7,0, eingestellt.

Durch das Einstellen des Trockenmassegehalts des filtrierten Eiklars auf den vorstehend beschriebenen Bereich und/oder (vorzugsweise und) das Einstellen des pH des filtrierten Eiklars auf den vorstehend beschriebenen Bereich werden optimale Ausgangsbedingungen für den späteren Fermentationsprozess (Verfahrensschritt (g)) geschaffen, welche eine Bildung der jeweils erwünschten Gärungsprodukte mit optimaler bzw. höchstmöglicher Rate erlauben.

Vorzugsweise wird in einem Verfahrensschritt (d) des Verfahrens gemäß der vorliegenden Erfindung eine oder mehrere Kohlenhydratquelle(n) zu dem Eiklar hinzugefügt.

Vorzugsweise ist bzw. sind die eine oder die mehreren in Verfahrensschritt (d) hinzugefügte(n) Kohlenhydratquelle(n) ausgewählt aus der Gruppe bestehend aus Saccharose, Glucose, Fructose, Lactose, Allose, Altrose, Mannose, Aldose, Galactose, Talose, Trehalose, Ribose, Arabinose, Xylose, Lyxose, Desoxyribose, Glucose-6-phosphat, Fructose-6-phosphat, Frustose-1,6-bisphosphat, Dihydroxyacetonphophat, Glycerinaldehyd-3-phosphat, 1,3-Bisphosphoglycerat, 3-Phosphoglycerat, 2-Phosphoglycerat, Phosphoenolpyruvat, Pyruvat, Cellobiose, Gentiobiose, Isomaltose, Isomaltulose, Lactulose, Laminaribiose, Maltose, Maltulose, Melibiose, Neohesperidose, Neotrehalose, Nigerose, Rutinose, Sambubiose, Sophorose und Trehalose.

Vorzugsweise ist bzw. sind die eine oder die mehreren in Verfahrensschritt (d) hinzugefügte(n) Kohlenhydratquelle(n) ausgewählt aus der Gruppe bestehend aus Saccharose, Glucose, Fructose und Lactose.

Vorzugsweise Kohlenhydratquelle ist bzw. sind die eine oder die mehreren in Verfahrensschritt (d) hinzugefügte(n) (n) ausgewählt aus der Gruppe bestehend aus Saccharose und Fructose.

Vorzugsweise wird in einem Verfahrensschritt (d) des Verfahrens gemäß der vorliegenden Erfindung Saccharose als Kohlenhydratquelle zu dem Eiklar hinzugefügt, entweder allein oder zusammen mit einer oder mehreren weiteren Kohlenhydratquelle(n).

Vorzugsweise wird in einem Verfahrensschritt (d) des Verfahrens gemäß der vorliegenden Erfindung Hefeextrakt zusammen mit einer oder mehreren Kohlenhydratquelle(n) zu dem Eiklar hinzugefügt.

Vorzugsweise werden in einem Verfahrensschritt (d) des Verfahrens gemäß der vorliegenden Erfindung Saccharose und Hefeextrakt zu dem Eiklar hinzugefügt.

Vorzugsweise wird bzw. werden die eine oder die mehreren Kohlenhydratquellen in einem Verfahrensschritt (d) des Verfahrens gemäß der vorliegenden Erfindung in einer Konzentration im Bereich von 0,01 bis 10 %, vorzugsweise im Bereich von 0,02 bis 7,5 %, vorzugsweise im Bereich von 0,04 bis 5,0 %, besonders vorzugsweise in einem Bereich von 0,05 bis 4,5 %, hinzugegeben, wobei die Angabe in Prozent als Gewichtsprozent bezogen auf die Gesamtmasse der Zusammensetzung zu verstehen ist.

Vorzugsweise wird in einem Verfahrensschritt (d) des Verfahrens gemäß der vorliegenden Erfindung eine erste Kohlenhydratquelle, vorzugsweise Saccharose, in einer Konzentration im Bereich von 1,0 bis 10,0 %, vorzugsweise in einem Bereich von 2,0 bis 8,0 %, vorzugsweise in einem Bereich von 3,0 bis 6,0, besonders vorzugsweise im Bereich von 4,0 bis 5,0 %, hinzugegeben, wobei die Angabe in Prozent als Gewichtsprozent bezogen auf die Gesamtmasse der Zusammensetzung zu verstehen ist. Vorzugsweise wird zusätzlich in einem Verfahrensschritt (d) des Verfahrens gemäß der vorliegenden Erfindung Hefeextrakt in einer Konzentration im Bereich von 0,01 bis 1,0 %, vorzugsweise in einem Bereich von 0,02 bis 0,08 %, vorzugsweise in einem Bereich von 0,03 bis 0,06, besonders vorzugsweise im Bereich von 0,04 bis 0,05 %, hinzugegeben, wobei die Angabe in Prozent als Gewichtsprozent bezogen auf die Gesamtmasse der Zusammensetzung zu verstehen ist.

Es wurde gefunden, dass durch die vorstehend beschriebene Zugabe der einen oder der mehreren Kohlenhydratquellen in Verfahrensschritt (d) des Verfahrens gemäß der vorliegenden Erfindung, vor allem durch die vorstehend beschriebene Zugabe von Saccharose und Hefeextrakt in den vorstehend beschriebenen Mengen, die im Zuge des Fermentationsprozesses jeweils gebildeten Gärungsendprodukte in einer finalen Konzentration in dem fermentierten Eiklar vorliegen, die zu einem angenehmen, leicht sauren, frischen bis joghurtartigen und/oder fermentierten Geschmack des fermentierten Eiklars führt.

Außerdem wurde gefunden, dass durch die vorstehend beschriebene Zugabe der einen oder der mehreren Kohlenhydratquellen in Verfahrensschritt (d) des Verfahrens gemäß der vorliegenden Erfindung, vor allem durch die vorstehend beschriebene Zugabe von Saccharose und Hefeextrakt in den vorstehend beschriebenen Mengen, die Viskosität der Zusammensetzung (des gemäß den Verfahrensschritten (b) bis (c) behandelten Eiklars) in einem solchen Maß erhöht wird, dass die texturellen Eigenschaften und das Mundgefühl dieser Zusammensetzung und des aus dem Verfahrensschritt (g) resultierenden fermentierten Eiklars positiv beeinflusst werden und eine angenehme cremige oder gelartige Konsistenz entsteht.

Der Begriff "Mikrobiologische Reduktion" wie hierin verwendet bezieht sich auf eine Verringerung oder gänzliche Eliminierung der in einer Zusammensetzung enthaltenen aktiven Mikroorganismen. Mögliche Methoden zum Erreichen einer mikrobiologischen Reduktion sind beispielswiese die Pasteurisierung oder die Sterilisation.

Vorzugsweise erfolgt die mikrobiologische Reduktion in Verfahrensschritt (e) mittels Pasteurisierung.

Vorzugsweise wird das Pasteurisieren des Eiklars in Verfahrensschritt (e) des Verfahrens gemäß der vorliegenden Erfindung als Ultrahocherhitzung durchgeführt, wobei der Begriff "Ultrahocherhitzung" sich auf ein Erhitzen auf eine Temperatur im Bereich von 85 bis 150 °C, vorzugsweise im Bereich von 135 bis 150 °C, für eine Dauer von mindestens 1 s, vorzugsweise auf eine Dauer im Bereich von 1 bis 10 s, vorzugsweise auf eine Dauer im Bereich von 1 bis 5 s, besonders vorzugsweise auf eine Dauer im Bereich von 1 bis 2 s, bezieht.

Vorzugsweise wird das Pasteurisieren des Eiklars in Verfahrensschritt (e) des Verfahrens gemäß der vorliegenden Erfindung als Kurzzeiterhitzung durchgeführt, wobei der Begriff "Kurzzeiterhitzung" sich auf ein Erhitzen auf eine Temperatur im Bereich von 71 bis 74 °C für eine Dauer im Bereich von 15 bis 40 s, vorzugsweise auf eine Dauer im Bereich von 15 bis 35 s, vorzugsweise auf eine Dauer im Bereich von 15 bis 25 s, besonders vorzugsweise auf eine Dauer im Bereich von 15 bis 20 s, bezieht.

Vorzugsweise wird das Pasteurisieren des Eiklars in Verfahrensschritt (e) des Verfahrens gemäß der vorliegenden Erfindung als Langzeiterhitzung durchgeführt, wobei der Begriff "Langzeiterhitzung" sich auf ein Erhitzen auf eine Temperatur im Bereich von 60 bis 70 °C, vorzugsweise auf eine Temperatur von 64 bis 68 °C, für eine Dauer im Bereich von 5 bis 10 min, vorzugsweise auf eine Dauer im Bereich von 5 bis 8 min, vorzugsweise auf eine Dauer im Bereich von 5 bis 7 min, besonders vorzugsweise auf eine Dauer von 6 min, bezieht.

Vorzugsweise wird das Pasteurisieren des Eiklars in Verfahrensschritt (e) des Verfahrens gemäß der vorliegenden Erfindung als Dauererhitzung durchgeführt, wobei der Begriff "Dauererhitzung" sich auf ein Erhitzen auf eine Temperatur im Bereich von 62 bis 65 °C für eine Dauer von bis zu 30 min, vorzugsweise 5 bis 30 min, besonders vorzugsweise 15 bis 30 min, ganz besonders vorzugsweise 30 min, bezieht.

Es wurde gefunden, dass die vorstehend beschriebene Langzeiterhitzung für das Pasteurisieren in Verfahrensschritt (e) des Verfahrens gemäß der vorliegenden Erfindung besonders vorteilhaft ist, da damit sowohl eine ausreichende Reduktion der Keimzahl in der Zusammensetzung (dem gemäß den Verfahrensschritten (b) bis (c) behandelten Eiklar) auf ein ausreichend geringes Maß, sodass der Fermentationsprozess gemäß Verfahrensschritt (g) nicht in irgendeiner Weise beeinträchtigt wird, als auch eine in Bezug auf den Zeit- und Energieaufwand optimierte Prozessführung erreicht werden kann.

Vorzugsweise wird das Pasteurisieren des Eiklars in Verfahrensschritt (e) des Verfahrens gemäß der vorliegenden Erfindung mittels eines nicht-thermischen Pasteurisierungsverfahrens ausgewählt aus der Gruppe bestehend aus Hochdruckpasteurisierung bzw. Hochdruckverarbeitung, Behandlung mittels eines gepulsten elektrischen Feldes (PEF), ohmsches Erhitzen und UV-Bestrahlung durchgeführt.

Der Begriff "Hochdruckpasteurisierung" oder "Hochdruckverarbeitung" wie hierin verwendet bezieht sich auf das Anlegen eines Drucks von 150 MPa oder mehr, vorzugsweise 200 MPa oder mehr, vorzugsweise 400 MPa oder mehr, vorzugsweise 600 MPa oder mehr.

Es wurde gefunden, dass eine Pasteurisierung mittels eines oder mehrerer der hierin beschriebenen nicht-thermischen Pasteurisierungsverfahren in Verfahrensschritt (e) des Verfahrens gemäß der vorliegenden Erfindung besonders vorteilhaft ist, da dadurch die mittels dem erfindungsgemäßen Verfahren hergestellte Zusammensetzung konserviert wird und gleichzeitig der Nährstoffgehalt, der Geschmack und die Textur der mittels dem erfindungsgemäßen Verfahren hergestellten Zusammensetzung nicht beeinträchtigt oder verändert wird.

Methoden zur Bestimmung der Keimzahl einer Zusammensetzung sind dem Fachmann aufgrund seines allgemeinen Fachwissens bekannt und er kann diese routinemäßig durchführen.

Vorzugsweise enthält das Verfahren gemäß der vorliegenden Erfindung die folgenden zusätzlichen Schritte:
(i) Texturieren des fermentierten Eiklars (FE), sodass ein texturiertes und fermentiertes Eiklar (TFE) entsteht, vorzugsweise eine Zusammensetzung wie hierin beschrieben,
   wobei das Texturieren gemäß Verfahrensschritt (i) einen oder mehrere der folgenden Teilschritte in beliebiger Reihenfolge oder der hier angegebenen Reihenfolge umfasst:
(i.i) Homogenisieren des fermentierten Eiklars mittels einer oder mehrerer mechanischer Methoden, vorzugsweise ausgewählt aus der Gruppe bestehend aus Dispersionshomogenisierung, Hochdruck-Homogenisierung, Rühren und Scheren, Ultraschall, Sprühen, Pumpen;
(i.ii) Regulieren der Temperatur des fermentierten Eiklars, vorzugsweise durch eine oder mehrere Methode(n) ausgewählt aus der Gruppe bestehend aus Erwärmen, Kochen, Ultrahocherhitzen, ohmschen Erhitzen und Kühlen oder nicht-thermischen Verfahren, wie Hochdruck, Ultraschall, ohmschen Erhitzen, Plasma und gepulsten elektrischen Feldern.

Vorzugsweise erfolgt das Homogenisieren gemäß Verfahrensschritt (i.i) mittels Rühren und Scheren, wobei eine aktive Scherung im Bereich von 3000/s bis 20000/s, vorzugsweise im Bereich von 4000/s bis 18000/s, vorzugsweise im Bereich von 5000/s bis 15000/s, besonders vorzugsweise im Bereich von 6000/s bis 13500/s eingesetzt wird.

Vorzugsweise erfolgt das Homogenisieren gemäß Verfahrensschritt (i.i) mittels Rühren und Scheren in zwei Stufen, wobei während der ersten Stufe eine aktive Scherung im Bereich von 10000/s bis 15000/s, vorzugsweise im Bereich von 11000/s bis 14000/s, vorzugsweise im Bereich von 12000 bis 13500/s, besonders vorzugsweise von 13200/s eingesetzt wird und wobei der zweiten Stufe eine aktive Scherung im Bereich von 4000/s bis 8000/s, vorzugsweise im Bereich von 5000/s bis 7000/s, vorzugsweise im Bereich von 5500/s bis 6800/s, besonders vorzugsweise von 6600/s eingesetzt wird und die erste Stufe vorzugsweise eine Dauer im Bereich von 1 bis 10 min, vorzugsweise im Bereich von 3 bis 8 min, besonders vorzugsweise von 6 min, hat.

Vorzugsweise wird das Regulieren der Temperatur des fermentierten Eiklars gemäß Verfahrensschritt (i.ii) so durchgeführt, dass die Temperatur auf eine Temperatur im Bereich von 50 bis 80 °C, vorzugsweise im Bereich von 55 bis 75 °C, vorzugsweise im Bereich von 60 bis 70 °C, besonders vorzugsweise auf 64 bis 67 °C erhöht wird, vorzugsweise für eine Dauer im Bereich von 1 bis 10 min, vorzugsweise im Bereich von 3 bis 8 min, besonders vorzugsweise für eine Dauer von 6 min.

Vorzugsweise erfolgt das Regulieren der Temperatur des fermentierten Eiklars gemäß Verfahrensschritt (i.ii) in zwei Stufen, wobei die Temperatur in der ersten Stufe zunächst auf eine Temperatur im Bereich von 50 bis 80 °C, vorzugsweise im Bereich von 55 bis 75 °C, vorzugsweise im Bereich von 60 bis 70 °C, besonders vorzugsweise auf 67 °C erhöht wird, vorzugsweise durch Erwärmen, und wobei die Temperatur in der zweiten Stufe auf eine Temperatur im Bereich von 30 bis 49 °C, vorzugsweise im Bereich von 35 bis 45 °C, vorzugsweise im Bereich von 37 bis 43 °C, besonders vorzugsweise auf 42 °C abgekühlt wird.

Es wurde überraschend gefunden, dass durch das Durchführen der Teilschritte (i.i) und (i.ii), wie vorstehend beschrieben, beim Texturieren des fermentierten Eiklars gemäß Verfahrensschritt (i) texturelle Eigenschaften erzeugt werden konnten, welche als besonders vorteilhaft wahrgenommen werden, wie z.B. eine Viskosität im Bereich von 5 bis 4*10⁵ mPas und eine insgesamt ansprechende Konsistenz, welche in Abhängigkeit des spezifischen zuvor durchgeführten Fermentationsprozesses entweder als gelartig, cremig oder schaumig definiert werden kann.

Vorzugsweise umfasst in einem Verfahren gemäß der vorliegenden Erfindung das Texturieren gemäß Verfahrensschritt (i) einen oder mehrere der folgenden, ggf. zusätzlichen, Teilschritte in beliebiger Reihenfolge oder der hier angegebenen Reihenfolge:
(i.iii) Hinzufügen eines oder mehrerer Fette und/oder Öle, vorzugsweise eines oder mehrerer pflanzlicher und/ oder tierischer Fette und/oder Öle;
(i.iv) Hinzufügen eines oder mehrerer Hydrokolloide, vorzugweise ausgewählt aus der Gruppe bestehend aus nativen Stärken, physikalisch modifizierten Stärken, chemisch modifizierten Stärken, nativen Cellulosen, modifizierten Cellulosen, Pektinen, modifizierte Pektine, Chitosan, Fasern, Xanthan, Gellan, Curdlan, Agar, Alginat, Carrageenan, Johannisbrotkernmehl, Guarkernmehl, Inulin, Dextrane, Pullulane, Furcellaran, Kojakmehl, Tarakernmehl, Cassia und weitere pflanzliche Mehle (Flohsamenschalen, Chiasamen und/oder Auszüge daraus), Gelatine, Kollagene;
(i.v) Hinzufügen eines oder mehrerer Emulgatoren, vorzugsweise ausgewählt aus der Gruppe bestehend aus Polysorbate, pflanzliches Lecithin, tierisches Lecithin, Mono- und Diglyceride und/ oder deren Ester und/oder Salze von Speisefettsäuren, Alginate, Zuckerester, Zuckerglyceride und native und/oder modifizierte Pektine und/oder Cellulosen.

Vorzugsweise wird bzw. werden in Schritt (i.iii) ein oder mehrere pflanzliche(s) Fett(e) und/oder Öl(e), vorzugsweise Öl(e), hinzugefügt. Besonders bevorzugt sind pflanzliche Öle ausgewählt aus der Gruppe bestehend aus Rapsöl, Olivenöl, Erdnussöl, Walnussöl, Maiskeimöl, Sonnenblumenöl, Mandelöl, Sesamöl, Palmöl, Reiskleieöl und Kokosöl, wobei sämtliche der vorstehend genannten Pflanzenöle einzeln oder in Mischung mit anderen Ölen und jeweils unabhängig voneinander in raffinierter, unraffinierter, kaltgepresster oder nativer Form eingesetzt werden können.

Vorzugsweise wird bzw. werden in Schritt (i.iii) zusätzlich oder alternativ zu einem oder mehreren pflanzlichen Fetten ein oder mehrere maritime(s) Fett(e) und/oder Öl(e), vorzugsweise Öl(e), hinzugefügt. Besonders bevorzugt sind maritime Öle ausgewählt aus der Gruppe bestehend aus Algenöl, Krillöl und Fischöl.

Es wurde gefunden, dass durch Hinzufügen eines oder mehrerer maritimer Fette und/oder Öle der Gehalt an Omega-3-Fettsäuren in der hergestellten Zusammensetzung erhöht werden kann.

Vorzugsweise wird in Schritt (i.iv) eines oder mehrere Hydrokolloide hinzugefügt, welche(s) ausgewählt ist bzw. sind aus der Gruppe bestehend aus nativen Stärken, physikalisch modifizierten Stärken, chemisch modifizierten Stärken und Fasern, vorzugsweise Zitrusfaser.

Vorzugsweise wird in Schritt (i.v) ein oder mehrere Emulgatoren hinzugefügt, welche(r) ausgewählt ist bzw. sind aus der Gruppe bestehend aus native und/oder modifizierte Pektine und/oder Stärken, vorzugsweise native und/oder modifizierte Pektine.

Es wurde gefunden, dass durch ein Texturieren gemäß Verfahrensschritt (i), wie vorstehend beschrieben, inklusive der Teilschritte (i.i) bis (i.v) ein fermentiertes Eiklar mit einem als besonders vorteilhaft und angenehm empfundenem Mundgefühl entsteht.

Der Begriff "Fermentationskultur" wie hierin verwendet bezieht sich auf eine Bakterienkultur, welche entweder aus mehreren verschiedenen Bakterienstämmen besteht oder eine Reinekultur eines einzigen Bakterienstammes ist.

Vorzugsweise wird in einem Verfahren gemäß der vorliegenden Erfindung der Verfahrensschritt (i) vor den Verfahrensschritten (f) und (g) durchgeführt, sodass ein texturiertes Eiklar entsteht und zu dem texturierten Eiklar eine Fermentationskultur, hinzugefügt wird, sodass ein modifiziertes texturiertes Eiklar entsteht und dieses modifizierte texturierte Eiklar fermentiert wird, sodass ein modifiziertes, texturiertes und fermentiertes Eiklar entsteht.

Vorzugsweise erfolgt in einem Verfahren gemäß der vorliegenden Erfindung das Hinzufügen einer Fermentationskultur gemäß Verfahrensschritt (f) derart, dass eine Menge der Fermentationskultur von 0,05 Gew.-% oder weniger, vorzugsweise 0,02 Gew.-% oder weniger, vorzugsweise 0,01 Gew.-% oder weniger, vorzugsweise 0,001 Gew.-% oder weniger, jeweils bezogen auf die Gesamtmasse des Eiklars bzw. des texturierten Eiklars, sofern der Verfahrensschritt (i) vor den Verfahrensschritten (f) und (g) durchgeführt wird, hinzugefügt wird.

Vorzugsweise wird die Fermentationskultur in Schritt (f) in lyophilisierter, flüssiger oder gefrorener Form hinzugefügt.

Vorzugsweise umfasst die Fermentationskultur keine Bakterien, die nicht zu Gattungen gehören, die ausgewählt sind aus der Gruppe bestehend aus *Streptococcus, Lactobacillus, Aerococcus, Facklamia, Alkalibacterium, Carnobacterium, Marinilactibacillus, Trichococcus, Enterococcus, Vagococcus, Pediococcus, Leuconostoc, Weissella* und *Lactococcus.*

Vorzugsweise umfasst die Fermentationskultur keine Bakterien, die nicht zu Gattungen gehören, die ausgewählt sind aus der Gruppe bestehend aus *Streptococcus* und *Lactobacillus.*

Vorzugsweise umfasst die Fermentationskultur keine Bakterien, die nicht zu Spezies gehören, die ausgewählt sind aus der Gruppe bestehend aus *Streptococcus agalactiae, Streptococcus anginosus, Streptococcus avium, Streptococcus bovis, Streptococcus canis, Streptococcus difficilis, Streptococcus durans, Streptococcus dysgalactiae, Streptococcus equi, Streptococcus gallolyticus, Streptococcus iniae, Streptococcus mitis, Streptococcus mutans, Streptococcus pasteurianus,* Streptococcus pneumoniae, Streptococcus porcinus, *Streptococcus pyogenes, Streptococcus salivarius, Streptococcus sanguinis, Streptococcus sobrinus, Streptococcus suis, Streptococcus thermophilus, Streptococcus uberis, Streptococcus viridans, Lactobacillus delbrueckii, Lactobacillus delbrueckii subsp. bulgaricus, Lactobacillus delbrueckii subsp. delbrueckii, Lactobacillus delbrueckii subsp. lactis, Lactobacillus acidophilus, Lactobacillus alimentarius, Lactobacillus amylolyticus, Lactobacillus amylovorus, Lactobacillus aviarius, Lactobacillus bifermentans, Lactobacillus brevis, Lactobacillus buchneri, Lactobacillus casei, Lactobacillus coryniformis, Lactobacillus crispatus, Lactobacillus crustorum, Lactobacillus curvatus, Lactobacillus dextrinicus, Lactobacillus fermentum, Lactobacillus gasseri, Lactobacillus helveticus, Lactobacillus hilgardii, Lactobacillus iners, Lactobacillus jensenii, Lactobacillus johnsonii, Lactobacillus kefiri, Lactobacillus lindneri, Lactobacillus mali, Lactobacillus oryzae, Lactobacillus panis, Lactobacillus parabuchneri, Lactobacillus paracasei, Lactobacillus paralimentarius, Lactobacillus plantarum, Lactobacillus reuteri, Lactobacillus rhamnosus, Lactobacillus rossiae, Lactobacillus ruminis, Lactobacillus sakei, Lactobacillus salivarius, Lactobacillus sanfranciscensis* und *Lactobacillus selangorensis.*

Vorzugsweise umfasst die Fermentationskultur keine Bakterien, die nicht zur Spezies *Streptococcus thermophilus* gehören.

Vorzugsweise ist die Fermentationskultur eine Reinkultur aus *Streptococcus thermophilus.*

Es wurde gefunden, dass die vorstehend beschriebene Zusammensetzung und die vorstehend beschriebene Menge der in Verfahrensschritt (f) hinzugefügter Fermentationskultur zu einem angenehmen, leicht säuerlichen, frischen bis joghurtartigen und/oder fermentierten Geschmack des fermentierten Eiklars führen.

Es wurde außerdem gefunden, dass die vorstehend beschriebene und vergleichsweise geringe Menge an in Verfahrensschritt (f) hinzugefügter Fermentationskultur ein kostengünstiges Verfahren, vor allem auch in großen Produktionsmaßstäben, ermöglicht, da die Menge an hinzugefügter Fermentationskultur einen wesentlichen Kostenfaktor für Fermentationsprozesse darstellt, vor allem für entsprechende Verfahren in großen Produktionsmaßstäben.

Vorzugsweise wird in Verfahrensschritt (f) zusätzlich zur Fermentationskultur auch eine Schutzkultur hinzugefügt.

Vorzugsweise erfolgt in einem Verfahren gemäß der vorliegenden Erfindung das Hinzufügen einer Schutzkultur gemäß Verfahrensschritt (f) derart, dass eine Menge der Schutzkultur von 0,01 Gew.-% oder weniger, vorzugsweise 0,0009 bis 0,01 Gew.-%, vorzugsweise 0,001 bis 0,01 Gew.-%, vorzugsweise 0,001 bis 0,009 Gew.-%, vorzugsweise 0,001 bis 0,007 Gew.-%, besonders vorzugsweise 0,001 bis 0,005 Gew.-%, jeweils bezogen auf die Gesamtmasse des Eiklars bzw. des texturierten Eiklars, sofern der Verfahrensschritt (i) vor den Verfahrensschritten (f) und (g) durchgeführt wird, hinzugefügt wird.

Der Begriff "Schutzkultur" wie hierin verwendet bezieht sich auf eine Bakterienkultur, welche entweder aus mehreren verschiedenen Bakterienstämmen besteht oder eine Reinkultur eines einzigen Bakterienstammes ist, wobei die Schutzkultur keine Bakterienstämme umfasst, welche Bestandteil der jeweils in Kombination mit der Schutzkultur eingesetzten Fermentationskultur sind.

Vorzugsweise wird die Schutzkultur in Schritt (f) in lyophilisierter, flüssiger oder gefrorener Form hinzugefügt.

Vorzugsweise umfasst die Schutzkultur keine Bakterien, die nicht zu Gattungen gehören, die ausgewählt sind aus der Gruppe bestehend aus *Streptococcus, Lactobacillus, Aerococcus, Facklamia, Alkalibacterium, Carnobacterium, Marinilactibacillus, Trichococcus, Enterococcus, Vagococcus, Pediococcus, Leuconostoc, Weissella* und *Lactococcus.*

Vorzugsweise umfasst die Schutzkultur keine Bakterien, die nicht zu Gattungen gehören, die ausgewählt sind aus der Gruppe bestehend aus *Streptococcus* und *Lactobacillus.*

Vorzugsweise umfasst die Schutzkultur keine Bakterien, die nicht zu Spezies gehören, die ausgewählt sind aus der aus der Gruppe bestehend aus *Streptococcus agalactiae, Streptococcus anginosus, Streptococcus avium, Streptococcus bovis, Streptococcus canis, Streptococcus difficilis, Streptococcus durans, Streptococcus dysgalactiae, Streptococcus equi, Streptococcus gallolyticus, Streptococcus iniae, Streptococcus mitis, Streptococcus mutans, Streptococcus pasteurianus,* Streptococcus pneumoniae, Streptococcus porcinus, *Streptococcus pyogenes, Streptococcus salivarius, Streptococcus sanguinis, Streptococcus sobrinus, Streptococcus suis, Streptococcus thermophilus, Streptococcus uberis, Streptococcus viridans, Lactobacillus delbrueckii, Lactobacillus delbrueckii subsp. bulgaricus, Lactobacillus delbrueckii subsp. delbrueckii, Lactobacillus delbrueckii subsp. lactis, Lactobacillus acidophilus, Lactobacillus alimentarius, Lactobacillus amylolyticus, Lactobacillus amylovorus, Lactobacillus aviarius, Lactobacillus bifermentans, Lactobacillus brevis, Lactobacillus buchneri, Lactobacillus casei, Lactobacillus coryniformis, Lactobacillus crispatus, Lactobacillus crustorum, Lactobacillus curvatus, Lactobacillus dextrinicus, Lactobacillus fermentum, Lactobacillus gasseri, Lactobacillus helveticus, Lactobacillus hilgardii, Lactobacillus iners, Lactobacillus jensenii, Lactobacillus johnsonii, Lactobacillus kefiri, Lactobacillus lindneri, Lactobacillus mali, Lactobacillus oryzae, Lactobacillus panis, Lactobacillus parabuchneri, Lactobacillus paracasei, Lactobacillus paralimentarius, Lactobacillus plantarum, Lactobacillus reuteri, Lactobacillus rhamnosus, Lactobacillus rossiae, Lactobacillus ruminis, Lactobacillus sakei, Lactobacillus salivarius, Lactobacillus sanfranciscensis* und *Lactobacillus selangorensis.*

Vorzugsweise umfasst die Schutzkultur keine Bakterien, die nicht zu Spezies gehören, die ausgewählt sind aus der aus der Gruppe bestehend aus *Lactobacillus rhamnosus, Lactobacillus paracasei, Lactobacillus bulgaricus, Bifidobacterium lactis* und *Lactobacillus plantarum.*

Vorzugsweise umfasst die Schutzkultur keine Bakterien, die nicht zu Spezies gehören, die ausgewählt sind aus der aus der Gruppe bestehend aus *Lactobacillus rhamnosus, Lactobacillus paracasei, Lactobacillus bulgaricus* und *Lactobacillus plantarum.*

Vorzugsweise umfasst die Schutzkultur keine Bakterien, die nicht zu Spezies gehören, die ausgewählt sind aus der Gruppe bestehend aus *Lactobacillus bulgaricus, Lactobacillus acidophilus* und *Bifidobacterium lactis.*

Vorzugsweise umfasst die Schutzkultur keine Bakterien, die nicht zu Spezies gehören, die ausgewählt sind aus der Gruppe bestehend aus *Lactobacillus acidophilus* und *Bifidobacterium lactis.*

Vorzugsweise erfolgt in einem Verfahren gemäß der vorliegenden Erfindung das Hinzufügen einer Fermentationskultur gemäß Verfahrensschritt (f) derart, dass eine Menge von in der Fermentationskultur enthaltenen Bakterien der Spezies *Streptococcus thermophilus* von 0,1 Gew.-% oder weniger, vorzugsweise 0,01 bis 0,08 Gew.-%, vorzugsweise 0,01 bis 0,07 Gew.-%, vorzugsweise 0,01 bis 0,06 Gew.-% und eine Menge von weiteren in der Schutzkultur enthaltenen Bakterienstämmen von insgesamt 0,01 Gew.-% oder weniger, vorzugsweise 0,001 bis 0,01 Gew.-%, vorzugsweise 0,002 bis 0,008 Gew.-%, vorzugsweise 0,003 bis 0,007 Gew.-%, vorzugsweise 0,004 bis 0,006 Gew.-%, jeweils bezogen auf die Gesamtmasse des Eiklars bzw. des texturierten Eiklars, sofern der Verfahrensschritt (i) vor den Verfahrensschritten (f) und (g) durchgeführt wird, hinzugefügt wird.

Vorzugsweise erfolgt in einem Verfahren gemäß der vorliegenden Erfindung das Hinzufügen einer Fermentationskultur und das Hinzufügen einer Schutzkultur gemäß Verfahrensschritt (f) derart, dass eine Menge von in der Fermentationskultur enthaltenen Bakterien der Spezies *Streptococcus thermophilus* von 0,1 Gew.-% oder weniger, vorzugsweise 0,01 bis 0,08 Gew.-%, vorzugsweise 0,01 bis 0,07 Gew.-%, vorzugsweise 0,01 bis 0,06 Gew.-% und eine Menge von in der Schutzkultur enthaltenen Bakterien der Spezies *Lactobacillus rhamnosus* von 0,01 Gew.-% oder weniger, vorzugsweise 0,001 bis 0,01 Gew.-%, vorzugsweise 0,002 bis 0,008 Gew.-%, vorzugsweise 0,003 bis 0,007 Gew.-%, vorzugsweise 0,004 bis 0,006 Gew.-%, jeweils bezogen auf die Gesamtmasse des Eiklars bzw. des texturierten Eiklars, sofern der Verfahrensschritt (i) vor den Verfahrensschritten (f) und (g) durchgeführt wird, hinzugefügt wird.

Vorzugsweise erfolgt in einem Verfahren gemäß der vorliegenden Erfindung das Hinzufügen einer Fermentationskultur und das Hinzufügen einer Schutzkultur gemäß Verfahrensschritt (f) derart, dass eine Menge von in der Fermentationskultur enthaltenen Bakterien der Spezies *Streptococcus thermophilus* von 0,1 Gew.-% oder weniger, vorzugsweise 0,01 bis 0,08 Gew.-%, vorzugsweise 0,01 bis 0,07 Gew.-%, vorzugsweise 0,01 bis 0,06 Gew.-% und eine Menge von in der Schutzkultur enthaltenen Bakterien der Spezies *Lactobacillus paracasei* von 0,01 Gew.-% oder weniger, vorzugsweise 0,001 bis 0,01 Gew.-%, vorzugsweise 0,002 bis 0,008 Gew.-%, vorzugsweise 0,003 bis 0,007 Gew.-%, vorzugsweise 0,004 bis 0,006 Gew.-%, jeweils bezogen auf die Gesamtmasse des Eiklars bzw. des texturierten Eiklars, sofern der Verfahrensschritt (i) vor den Verfahrensschritten (f) und (g) durchgeführt wird, hinzugefügt wird.

Vorzugsweise erfolgt in einem Verfahren gemäß der vorliegenden Erfindung das Hinzufügen einer Fermentationskultur und das Hinzufügen einer Schutzkultur gemäß Verfahrensschritt (f) derart, dass eine Menge von in der Fermentationskultur enthaltenen Bakterien der Spezies *Streptococcus thermophilus* von 0,1 Gew.-% oder weniger, vorzugsweise 0,01 bis 0,08 Gew.-%, vorzugsweise 0,01 bis 0,07 Gew.-%, vorzugsweise 0,01 bis 0,06 Gew.-% und eine Menge von in der Schutzkultur enthaltenen Bakterien der Spezies *Lactobacillus bulgaricus* von 0,01 Gew.-% oder weniger, vorzugsweise 0,001 bis 0,01 Gew.-%, vorzugsweise 0,002 bis 0,008 Gew.-%, vorzugsweise 0,003 bis 0,007 Gew.-%, vorzugsweise 0,004 bis 0,006 Gew.-%, jeweils bezogen auf die Gesamtmasse des Eiklars bzw. des texturierten Eiklars, sofern der Verfahrensschritt (i) vor den Verfahrensschritten (f) und (g) durchgeführt wird, hinzugefügt wird.

Vorzugsweise umfasst die Fermentationskultur keine Bakterien, die nicht zu Spezies *Streptococcus thermophilus* gehören und vorzugsweise umfasst die Schutzkultur keine Bakterien, die nicht zu Spezies *Lactobacillus rhamnosus* gehören, wobei das Hinzufügen einer Fermentationskultur und einer Schutzkultur gemäß Verfahrensschritt (f) derart erfolgt, dass eine Menge von in der Fermentationskultur enthaltenen Bakterien der Spezies *Streptococcus thermophilus* von 0,1 Gew.-% oder weniger, vorzugsweise 0,01 bis 0,08 Gew.-%, vorzugsweise 0,01 bis 0,07 Gew.-%, vorzugsweise 0,01 bis 0,06 Gew.-% und eine Menge von in der Schutzkultur enthaltenen Bakterien der Spezies *Lactobacillus rhamnosus* von 0,01 Gew.-% oder weniger, vorzugsweise 0,001 bis 0,01 Gew.-%, vorzugsweise 0,002 bis 0,008 Gew.-%, vorzugsweise 0,003 bis 0,007 Gew.-%, vorzugsweise 0,004 bis 0,006 Gew.-%, jeweils bezogen auf die Gesamtmasse des Eiklars bzw. des texturierten Eiklars, sofern der Verfahrensschritt (i) vor den Verfahrensschritten (f) und (g) durchgeführt wird, hinzugefügt wird.

Vorzugsweise umfasst die Fermentationskultur keine Bakterien, die nicht zu Spezies *Streptococcus thermophilus* gehören und vorzugsweise umfasst die Schutzkultur keine Bakterien, die nicht zu Spezies *Lactobacillus paracasei* gehören, wobei das Hinzufügen einer Fermentationskultur und einer Schutzkultur gemäß Verfahrensschritt (f) derart erfolgt, dass eine Menge von in der Fermentationskultur enthaltenen Bakterien der Spezies *Streptococcus thermophilus* von 0,1 Gew.-% oder weniger, vorzugsweise 0,01 bis 0,08 Gew.-%, vorzugsweise 0,01 bis 0,07 Gew.-%, vorzugsweise 0,01 bis 0,06 Gew.-% und eine Menge von in der Schutzkultur enthaltenen Bakterien der Spezies *Lactobacillus paracasei* von 0,01 Gew.-% oder weniger, vorzugsweise 0,001 bis 0,01 Gew.-%, vorzugsweise 0,002 bis 0,008 Gew.-%, vorzugsweise 0,003 bis 0,007 Gew.-%, vorzugsweise 0,004 bis 0,006 Gew.-%, jeweils bezogen auf die Gesamtmasse des Eiklars bzw. des texturierten Eiklars, sofern der Verfahrensschritt (i) vor den Verfahrensschritten (f) und (g) durchgeführt wird, hinzugefügt wird.

Vorzugsweise umfasst die Fermentationskultur keine Bakterien, die nicht zu Spezies *Streptococcus thermophilus* gehören und vorzugsweise umfasst die Schutzkultur keine Bakterien, die nicht zu Spezies *Lactobacillus bulgaricus* gehören, wobei das Hinzufügen einer Fermentationskultur und einer Schutzkultur gemäß Verfahrensschritt (f) derart erfolgt, dass eine Menge von in der Fermentationskultur enthaltenen Bakterien der Spezies *Streptococcus thermophilus* von 0,1 Gew.-% oder weniger, vorzugsweise 0,01 bis 0,08 Gew.-%, vorzugsweise 0,01 bis 0,07 Gew.-%, vorzugsweise 0,01 bis 0,06 Gew.-% und eine Menge von in der Schutzkultur enthaltenen Bakterien der Spezies *Lactobacillus bulgaricus* von 0,01 Gew.-% oder weniger, vorzugsweise 0,001 bis 0,01 Gew.-%, vorzugsweise 0,002 bis 0,008 Gew.-%, vorzugsweise 0,003 bis 0,007 Gew.-%, vorzugsweise 0,004 bis 0,006 Gew.-%, jeweils bezogen auf die Gesamtmasse des Eiklars bzw. des texturierten Eiklars, sofern der Verfahrensschritt (i) vor den Verfahrensschritten (f) und (g) durchgeführt wird, hinzugefügt wird.

Es wurde gefunden, dass eine Kombination der vorstehend beschriebenen Zusammensetzung und Menge der in Verfahrensschritt (f) hinzugefügten Fermentationskultur mit der vorstehend beschriebenen Zusammensetzung und Menge der in Verfahrensschritt (f) hinzugefügten Schutzkultur zu einer verbesserten Lagerbeständigkeit und zur einer verbesserten Haltbarkeit des fermentierten Eiklars führen.

Es wurde gefunden, dass die vorstehend beschriebene Zusammensetzung und Menge der in Verfahrensschritt (f) hinzugefügten Fermentationskultur, insbesondere in Kombination mit der vorstehend beschriebenen Zusammensetzung und Menge der in Verfahrensschritt (f) hinzugefügten Schutzkultur und/oder in Kombination mit der vorstehend beschriebenen Menge der vorstehend beschriebenen Kohlenhydratquellen dazu führt, dass das fermentierte Eiklar eine ansprechende, gelartige und/oder cremige Konsistenz und ein ansprechendes Mundgefühl aufweist.

Es wurde außerdem gefunden, dass eine Kombination der vorstehend beschriebenen Zusammensetzung und Menge der in Verfahrensschritt (f) hinzugefügten Fermentationskultur in Kombination mit der vorstehend beschriebenen Zusammensetzung und Menge der in Verfahrensschritt (f) hinzugefügten Schutzkultur den negativen Einfluss von im Eiklar befindlichen Schädlingsstämmen auf die Fermentationskultur verringert, wie beispielsweise eine Reduktion des Wachstums der Fermentationskultur und/oder die Vermehrung von Schädlingsstämmen und/oder Pilzen. Dies lässt sich beispielsweise anhand einer erhöhten Produktionsrate der entsprechenden Gärungsendprodukte und/oder einem erhöhten finalen Titer der entsprechenden finalen Gärungsendprodukte im fermentierten Eiklar feststellen. Die Produktionsrate der entsprechenden Gärungsendprodukte und/oder der erhöhte finale Titer der entsprechenden Gärungsendprodukte im fermentierten Eiklar sind bei Verwendung einer Schutzkultur (wie vorstehend beschrieben) zusätzlich zur Fermentationskultur im Vergleich zur alleinigen Verwendung einer Fermentationskultur (ohne Schutzkultur) erhöht. Schädlingsstämme und/oder Pilze sind bei Verwendung einer Schutzkultur (wie vorstehend beschrieben) zusätzlich zur Fermentationskultur im Vergleich zur alleinigen Verwendung einer Fermentationskultur (ohne Schutzkultur) im fermentierten Eiklar in deutlich geringeren Mengen vorhanden oder gar nicht nachweisbar, da das Wachstum von Schädlingsstämmen und/oder Pilzen deutlich reduziert oder gänzlich gehemmt wird.

Vorzugsweise wird in einem Verfahren gemäß der vorliegenden Erfindung der Lysozymgehalt des bereitgestellten Eiklars auf 0,45 Gew.-% oder weniger, vorzugsweise 0,25 Gew.-% oder weniger, vorzugsweise 0,15 Gew.-% oder weniger, vorzugsweise 0,045 Gew.-% oder weniger, jeweils bezogen auf den Gesamtproteingehalt des in Schritt (a) bereitgestellten Eiklars, reduziert und/oder die Aktivität des in dem in Schritt (a) bereitgestellten Eiklar enthaltenen Lysozyms reduziert.

Der Begriff "Lysozymgehalt" wie hierin verwendet bezieht sich auf die Menge an katalytisch aktivem Lysozym, welches es in einer Zusammensetzung enthalten ist.

Vorzugsweise bezieht sich die hierin beschriebene Reduktion des Lysozymgehalts im bereitgestellten Eiklar auf eine Inaktivierung zumindest eines Teils des im bereitgestellten Eiklar befindlichen Lysozyms, beispielsweise durch Denaturierung und/oder auf ein Entfernen bzw. Abtrennen zumindest eines Teils des im bereitgestellten Eiklar befindlichen Lysozyms von den übrigen Bestandteilen des bereitgestellten Eiklars.

Vorzugsweise erfolgt die vorstehend beschriebene Reduktion des Lysozymgehalts des bereitgestellten Eiklars bevor der Verfahrensschritt (b) durchgeführt wird.

Vorzugsweise erfolgt die Reduktion des Lysozymgehalts des bereitgestellten Eiklars mittels Erhitzen und/oder mittels Ultrafiltration und/oder mittels eines Ionenaustauschers.

Vorzugsweise erfolgt die Reduktion des Lysozymgehalts des bereitgestellten Eiklars ohne Einwirkung von Hitze mittels Ultrafiltration und/oder mittels eines Ionenaustauschers, besonders vorzugsweise mittels eines Ionenaustauschers.

Es wurde überraschend gefunden, dass aufgrund des reduzierten Lysozymgehalts des bereitgestellten Eiklars eine geringe Menge Fermentationskultur und/oder Schutzkultur, wie vorstehend beschrieben, als Inokulum für den Fermentationsprozess ausreicht. Da die für einen Fermentationsprozess eingesetzten Mikroorganismen einen wesentlichen Kostenfaktor darstellen, wird durch den reduzierten Lysozymgehalt des bereitgestellten Eiklars die Wirtschaftlichkeit des erfindungsgemäßen Verfahrens deutlich verbessert.

Es wurde überraschend gefunden, dass durch die Reduktion des Lysozymgehalts des bereitgestellten Eiklars ohne Einwirkung von Hitze mittels Ultrafiltration und/oder mittels eines Ionenaustauschers Fehlaromen (Off-Flavors) im Eiklar vermieden werden können. Dadurch ist es möglich, den Lysozymgehalt des bereitgestellten Eiklars zu reduzieren, ohne dabei dessen Geschmack und/oder Geruch negativ zu beeinflussen.

Der Begriff Off-Flavor" wie hierin verwendet hat die dem Fachmann aufgrund seines allgemeinen Fachwissens geläufige Bedeutung. Der Begriff "Off-Flavor" wie hierin verwendet bezieht sich vorzugsweise auf Aromafehler oder Fehlaromen, die eine Abweichung eines Aromas von dem typischerweise erwarteten Aroma darstellen.

Vorzugsweise wird in einem Verfahren gemäß der vorliegenden Erfindung durch das Texturieren gemäß Verfahrensschritt (i) eine Viskosität im Bereich von 5 bis 4*10⁵ mPas und/oder eine gelartige und/oder cremige und/oder schaumige und/oder löffelbare Konsistenz eingestellt.

Vorzugsweise wird in einem Verfahren gemäß der vorliegenden Erfindung durch das Texturieren gemäß Verfahrensschritt (i) eine Viskosität im Bereich von 5 bis 4*10⁵ mPas, vorzugsweise im Bereich von 6 bis 3*10⁵ mPas, vorzugsweise im Bereich von 7 bis 2*10⁵ mPas, vorzugsweise im Bereich von 8 bis 10⁵ mPas, eingestellt.

In einem weiteren Aspekt betrifft die vorliegende Erfindung eine Zusammensetzung bestehend aus oder umfassend fermentiertes Eiklar (vorzugsweise wie vorstehend beschrieben, besonders vorzugsweise wie vorstehend als bevorzugt bezeichnet) hergestellt oder herstellbar durch ein Verfahren gemäß der vorliegenden Erfindung (vorzugsweise wie vorstehend beschrieben, besonders vorzugsweise wie vorstehend als bevorzugt bezeichnet).

Sämtliche der vorstehend für ein erfindungsgemäßes Verfahren beschriebenen Vorteile gelten für eine erfindungsgemäße Zusammensetzung bestehend aus oder umfassend fermentiertes Eiklar (vorzugsweise wie vorstehend beschrieben, besonders vorzugsweise wie vorstehend als bevorzugt bezeichnet) entsprechend analog.

In einem weiteren Aspekt betrifft die vorliegende Erfindung eine Lebensmittelzubereitung bestehend aus oder umfassend eine Zusammensetzung gemäß der vorliegenden Erfindung (vorzugsweise wie vorstehend beschrieben, besonders vorzugsweise wie vorstehend als bevorzugt bezeichnet).

Vorzugsweise handelt es sich Lebensmittelzubereitung bestehend aus oder umfassend eine Zusammensetzung gemäß der vorliegenden Erfindung um eine Dessertcreme und/oder einen Pudding.

Vorzugsweise handelt es sich Lebensmittelzubereitung bestehend aus oder umfassend eine Zusammensetzung gemäß der vorliegenden Erfindung um eine oder mehrere Arten von Dessertcreme ausgewählt aus der Gruppe bestehend aus Joghurtcreme, Quarkspeise, Bayerische Creme, Chaudeau, Crema catalana, Crème brûlée, Crème Chantilly, Crème anglaise, Dulce de leche, Eiercreme, Firni, Flan, Mokkacreme, Nusscreme, Schokoladencreme, Welfenspeise, Zabaglione.

Vorzugsweise handelt es sich Lebensmittelzubereitung bestehend aus oder umfassend eine Zusammensetzung gemäß der vorliegenden Erfindung um ein joghurtähnliches oder quarkähnliches Produkt.

Vorzugsweise zeichnet sich die Lebensmittelzubereitung bestehend aus oder umfassend eine Zusammensetzung gemäß der vorliegenden Erfindung durch einen vergleichsweise hohen Proteingehalt im Bereich von 2 bis 20 Gew.-%, vorzugsweise 4 bis 18 Gew.-%, vorzugsweise 6 bis 17 Gew.-%, vorzugsweise von 8 bis 16 Gew.-%, besonders vorzugsweise von 9 bis 15 Gew.-%, jeweils bezogen auf die Gesamtmasse der Lebensmittelzubereitung, aus.

Vorzugsweise zeichnet sich die Lebensmittelzubereitung bestehend aus oder umfassend eine Zusammensetzung gemäß der vorliegenden Erfindung durch einen vergleichsweise geringen Kohlenhydratgehalt im Bereich von 1 bis 20 Gew.-%, vorzugsweise 1 bis 15 Gew.-%, vorzugsweise 1 bis 10 Gew.-%, vorzugsweise von 1 bis 8 Gew.-%, besonders vorzugsweise von 3 bis 8 Gew.-%, jeweils bezogen auf die Gesamtmasse der Lebensmittelzubereitung, aus.

Vorzugsweise zeichnet sich die Lebensmittelzubereitung bestehend aus oder umfassend eine Zusammensetzung gemäß der vorliegenden Erfindung durch einen vergleichsweise geringen Fettgehalt im Bereich von 0,1 bis 10 Gew.-%, vorzugsweise im Bereich von 0,5 bis 5 Gew.-%, vorzugsweise im Bereich von 1 bis 4 Gew.-%, besonders vorzugsweise von 3,8 Gew.-%, jeweils bezogen auf die Gesamtmasse der Lebensmittelzubereitung, aus.

Vorzugsweise zeichnet sich die Lebensmittelzubereitung bestehend aus oder umfassend eine Zusammensetzung gemäß der vorliegenden Erfindung durch eine gelartige und/oder cremige und/oder schaumige Konsistenz aus.

Vorzugsweise zeichnet sich die Lebensmittelzubereitung bestehend aus oder umfassend eine Zusammensetzung gemäß der vorliegenden Erfindung durch eine Viskosität im Bereich von 5 bis 4*10⁵ mPas, vorzugsweise im Bereich von 6 bis 3*10⁵ mPas, vorzugsweise im Bereich von 7 bis 2*10⁵ mPas, vorzugsweise im Bereich von 8 bis 10⁵ mPas, aus.

Sämtliche der vorstehend für ein erfindungsgemäßes Verfahren bzw. für eine erfindungsgemäße Zusammensetzung beschriebenen Vorteile gelten für eine erfindungsgemäße Lebensmittelzubereitung entsprechend analog.

In einem weiteren Aspekt betrifft die vorliegende Erfindung eine Verwendung einer Zusammensetzung gemäß der vorliegenden Erfindung (vorzugsweise wie vorstehend beschrieben, besonders vorzugsweise wie vorstehend als bevorzugt bezeichnet), vorzugsweise einer Zusammensetzung gemäß der vorliegenden Erfindung hergestellt oder herstellbar durch ein Verfahren gemäß der vorliegenden Erfindung (vorzugsweise wie vorstehend beschrieben, besonders vorzugsweise wie vorstehend als bevorzugt bezeichnet), als Lebensmittelzubereitung (vorzugsweise wie vorstehend beschrieben, besonders vorzugsweise wie vorstehend als bevorzugt bezeichnet) und/oder als Bestandteil einer Lebensmittelzubereitung.

Sämtliche der vorstehend für ein erfindungsgemäßes Verfahren bzw. für eine erfindungsgemäße Zusammensetzung beschriebenen Vorteile gelten für eine erfindungsgemäße Verwendung einer solchen Zusammensetzung entsprechend analog.

Vorzugsweise enthält die Lebensmittelzubereitung gemäß der vorliegenden Erfindung 15,0 Gew.-% oder weniger, vorzugsweise 5,0 Gew.-% oder weniger, vorzugsweise gar kein Casein,
und/oder
5,0 Gew.-% oder weniger, vorzugsweise 2,0 Gew.-% oder weniger, vorzugsweise gar kein Molkenprotein,
wobei die Angaben in Gew.-% jeweils bezogen sind auf die Gesamtmasse der Lebensmittelzubereitung.

Es wurde gefunden, dass die Lebensmittelzubereitung gemäß der vorliegenden Erfindung aufgrund des vorstehend beschriebenen geringen Gehalts an Casein und Molkenprotein für Endkonsumenten mit Lactoseintoleranz geeignet ist.

Vorzugsweise liegt die Lebensmittelzubereitung gemäß der vorliegenden Erfindung und/oder das fermentierte und/oder texturierte Eiklar als Bestandteil einer Zusammensetzung gemäß der vorliegenden Erfindung in cremiger und/oder gelartiger und/oder flüssiger und/ oder schaumiger und/oder getrockneter und/oder gefriergetrockneter und/oder sprühgetrockneter und/oder gefrorener Form, vorzugsweise als Pulver und/oder Granulat und/oder Agglomerate (verkapselt oder unverkapselt) und/oder Eicreme, vor.

### Beispiele

### Beispiel 1:

### Fermentation 1:

Zunächst wird in einem Verfahrensschritt (a) Eiklar bereitgestellt, das durch Öffnen von Hühnereiern und Abtrennen des Eigelbs hergestellt wurde. Anschließend wird der Lysozymgehalt in dem bereitgestellten Eiklar mittels Ionenaustauscher auf < 1% reduziert, wobei die Angabe in Prozent als Gewichtsprozent bezogen auf den Gesamtproteinanteil des bereitgestellten Eiklars zu verstehen ist. Anschließend wird in Verfahrensschritt (b) der Trockenmassegehalt auf 18% und ein Salzgehalt auf weniger als 0,23 % mittels Ultrafiltration eingestellt, wobei die Angaben in Prozent als Gewichtsprozent bezogen auf die Gesamtmasse des bereitgestellten Eiklars zu verstehen sind. Der Salzgehalt wurde dabei gemäß § 64 LFGB, L 05.02-1 eingestellt und der Trockenmassegehalt wurde dabei gemäß § 64 LFGB, L 05.00-12 eingestellt. Weitere gängige Bestimmungsmethoden für die Bestimmung des Trockenmassegehalts sowie für die Bestimmung des Salzgehalts sind dem Fachmann geläufig. Anschließend wird in einem Verfahrensschritt (c) der Trockenmassegehalt mittels Trinkwasser auf 10 % eingestellt, wobei die Angabe in Prozent als Gewichtsprozent bezogen auf die Gesamtmasse der Zusammensetzung zu verstehen ist, und der pH wird mittels Zitronensäure auf einen Wert im Bereich von 6,8 bis 7,0 eingestellt. Anschließend werden in einem Verfahrensschritt (d) 4,5 % Saccharose und 0,05 % Hefeextrakt hinzugegeben, wobei die Angabe in Prozent als Gewichtsprozent bezogen auf die Gesamtmasse der Zusammensetzung zu verstehen ist. Anschließend wird die erhaltene Mischung in einem Verfahrensschritt (e) bei 68 °C für 240 s pasteurisiert und nach dem Pasteurisieren auf eine Temperatur von 42 °C abgekühlt. Anschließend wird in einem Verfahrensschritt (f) eine Fermentationskultur von lyophilisiertem *Streptococcus thermophilus* in einer Konzentration von 0,01 % hinzugegeben, wobei die Angabe in Prozent als Gewichtsprozent bezogen auf die Gesamtmasse des bereitgestellten Eiklars zu verstehen ist. Zusätzlich zu der in Verfahrensschritt (f) hinzugegebenen Fermentationskultur wird eine Schutzkultur bestehend aus *Lactobacillus rhamnosus* in einer Konzentration von 0,001 % hinzugegeben, wobei die Angabe in Prozent als Gewichtsprozent bezogen auf die Gesamtmasse des bereitgestellten Eiklars zu verstehen ist. Anschließend wird in einem Verfahrensschritt (g) bei 42°C für 24 h fermentiert, wobei der pH während der gesamten Fermentationsdauer kontrolliert und unter pH 4,5 gehalten wurde.

### Texturierung 1:

Im Anschluss an das vorstehend beschriebene Fermentationsverfahren 1 wurde für den Texturierungsprozess die Komponenten gemäß Tabelle 1 in dem in Tabelle 1 angegeben Verhältnis zusammengefügt.

**Tabelle 1 Zusammensetzung für das Texturieren gemäß dem Texturierungsverfahren 1.**

| **Komponente** | **Anteil* [Gew.-%]** |
|---|---|
| Fermentiertes Eiklar (gemäß Fermentation 1)^{*1} | 91,85 |
| Stärke | 2,2 |
| Pektin | 1,2 |
| Rapsöl | 3,8 |

| | |
|---|---|
| * Angaben in Gewichtsprozent sind bezogen auf die Gesamtmasse der Zusammensetzung. ^{*1} Die aus dem Fermentationsverfahren 1 resultierende Zusammensetzung. | |

Die Zusammensetzung gemäß Tabelle 1 wurde auf 67 °C erwärmt und diese Temperatur wurde für 240 s konstant gehalten. Während dieser Zeit wird die Zusammensatzung gerührt bei einer aktiven Scherung von 4000 U/min. Anschließend wurde die Zusammensetzung gemäß Tabelle 1 gerührt bei einer aktiven Scherung von 1000 U/min und dabei auf eine Temperatur von 25 °C abgekühlt. Anschließend wurde das Produkt in die Endverpackung abgefüllt und bei einer Temperatur im Bereich von 4 bis 8 °C gelagert. Optional kann das Produkt vor der Abfüllung durch die Zugabe von Fruchtpürees und/oder Aromen verfeinert werden.

Als Ergebnis wurde ein mikrobiologisch sicheres und texturell lagerstabilies, cremiges Produkt erreicht. Der pH-Wert konnte dabei auf mind. 4,5, besser sogar auf 4,2 reduziert werden. Im Rahmen einer gekühlten Lagerung von 12 Wochen konnten keine mikrobiologisch problematischen Keimgruppen identifiziert bzw. detektiert werden (z.B. *Bacillus cereus, Enterobacteriacecae,* Hefen und Schimmelpilze). Auch die sensorische Untersuchung des Produktes nach der Herstellung und während der Lagerung hat gezeigt, dass dieses durch Attribute wie glatt, glänzend, homogen, weiß bis cremefarbig im Aussehen, als stichfest bis dickflüssig in der Textur, cremig, homogen und vollmundig im Mundgefühl sowie als frisch, säuerlich, milchig bis joghurtartig im Aroma beschrieben werden kann. Die Textur (angegeben als komplexe Viskosität) konnte am Ende der Lagerdauer auf 329 Pa*s erhöht werden. In einem Challengetest konnte darüber hinaus gezeigt werden, dass das wie vorstehend beschrieben unter Verwendung einer Schutzkultur hergestellte Produkt auch bei höheren Temperaturen (sogar bis Raumtemperatur) über 10 - 12 Wochen stabil ist.

### Beispiel 2

### Fermentation 2:

Zunächst wird in einem Verfahrensschritt (a) Eiklar bereitgestellt, das durch Öffnen von Hühnereiern und Abtrennen des Eigelbs hergestellt wurde. Anschließend wird der Lysozymgehalt in dem bereitgestellten Eiklar mittels Ionenaustauscher auf < 1% reduziert, wobei die Angabe in Prozent als Gewichtsprozent bezogen auf den Gesamtproteinanteil des bereitgestellten Eiklars zu verstehen ist. Anschließend wird in Verfahrensschritt (b) der Trockenmassegehalt auf 18% und ein Salzgehalt auf weniger als 0,23 % mittels Ultrafiltration eingestellt, wobei die Angaben in Prozent als Gewichtsprozent bezogen auf die Gesamtmasse des bereitgestellten Eiklars zu verstehen sind. Der Salzgehalt wurde dabei gemäß § 64 LFGB, L 05.02-1 eingestellt und der Trockenmassegehalt wurde dabei gemäß § 64 LFGB, L 05.00-12 eingestellt. Weitere gängige Bestimmungsmethoden für die Bestimmung des Trockenmassegehalts sowie für die Bestimmung des Salzgehalts sind dem Fachmann geläufig. Anschließend wird in einem Verfahrensschritt (c) der Trockenmassegehalt mittels Trinkwasser auf 10 % eingestellt, wobei die Angabe in Prozent als Gewichtsprozent bezogen auf die Gesamtmasse der Zusammensetzung zu verstehen ist, und der pH wird mittels Zitronensäure auf einen Wert im Bereich von 6,8 bis 7,0 eingestellt. Anschließend werden in einem Verfahrensschritt (d) 4,5 % Saccharose und 0,05 % Hefeextrakt hinzugegeben, wobei die Angabe in Prozent als Gewichtsprozent bezogen auf die Gesamtmasse der Zusammensetzung zu verstehen ist. Anschließend wird die erhaltene Mischung in einem Verfahrensschritt (e) bei 68 °C für 240 s pasteurisiert und nach dem Pasteurisieren auf eine Temperatur von 42 °C abgekühlt. Anschließend wird in einem Verfahrensschritt (f) eine Fermentationskultur von lyophilisiertem *Streptococcus thermophilus* in einer Konzentration von 0,01 % hinzugegeben, wobei die Angabe in Prozent als Gewichtsprozent bezogen auf die Gesamtmasse des bereitgestellten Eiklars zu verstehen ist. Anschließend wird in einem Verfahrensschritt (g) bei 42°C für 24 h fermentiert, wobei der pH während der gesamten Fermentationsdauer kontrolliert und unter pH 4,5 gehalten wurde.

### Texturierung 2:

Im Anschluss an das vorstehend beschriebene Fermentationsverfahren 2 wurde für den Texturierungsprozess die Komponenten gemäß Tabelle 2 in dem in Tabelle 2 angegeben Verhältnis zusammengefügt.

**Tabelle 2 Zusammensetzung für das Texturieren gemäß dem Texturierungsverfahren 1.**

| **Komponente** | **Anteil^{*} [Gew.-%]** |
|---|---|
| Fermentiertes Eiklar (gemäß Fermentation 1)^{*1} | 91,85 |
| Stärke | 2,2 |
| Pektin | 1,2 |
| Rapsöl | 3,8 |

| | |
|---|---|
| * Angaben in Gewichtsprozent sind bezogen auf die Gesamtmasse der Zusammensetzung. ^{*1} Die aus dem Fermentationsverfahren 1 resultierende Zusammensetzung. | |

Die Zusammensetzung gemäß Tabelle 2 wurde auf 67 °C erwärmt und diese Temperatur wurde für 240 s konstant gehalten. Während dieser Zeit wird die Zusammensatzung gerührt bei einer aktiven Scherung von 4000 U/min. Anschließend wurde die Zusammensetzung gemäß Tabelle 2 gerührt bei einer aktiven Scherung von 1000 U/min und dabei auf eine Temperatur von 25 °C abgekühlt. Anschließend wurde das Produkt in die Endverpackung abgefüllt und bei einer Temperatur im Bereich von 4 bis 8 °C gelagert. Optional kann das Produkt vor der Abfüllung durch die Zugabe von Fruchtpürees und/oder Aromen verfeinert werden.

Als Ergebnis wurde ein mikrobiologisch sicheres und texturell lagerstabilies, cremiges Produkt erreicht werden. Der pH-Wert konnte dabei auf mind. 4,5 reduziert werden. Im Rahmen einer gekühlten Lagerung von 10 Wochen konnten keine mikrobiologisch problematischen Keimgruppen identifiziert bzw. detektiert werden (z.B. *Bacillus cereus, Enterobacteriacecae,* Hefen und Schimmelpilze). Auch die sensorische Untersuchung des Produktes nach der Herstellung und während der Lagerung hat gezeigt, dass dieses durch Attribute, wie glatt, glänzend, homogen, weiß bis cremefarbig im Aussehen, als stichfest bis dickflüssig in der Textur, cremig, homogen und vollmundig im Mundgefühl sowie als frisch, säuerlich, milchig bis joghurtartig im Aroma beschrieben werden kann.

### Beispiel 3

### Fermentation 3:

Zunächst wird in einem Verfahrensschritt (a) Eiklar bereitgestellt, das durch Öffnen von Hühnereiern und Abtrennen des Eigelbs hergestellt wurde. Anschließend wird der Lysozymgehalt in dem bereitgestellten Eiklar mittels Ionenaustauscher auf < 1% reduziert, wobei die Angabe in Prozent als Gewichtsprozent bezogen auf den Gesamtproteinanteil des bereitgestellten Eiklars zu verstehen ist. Anschließend wird in Verfahrensschritt (b) der Trockenmassegehalt auf 22% und ein Salzgehalt auf weniger als 0,23 % mittels Ultrafiltration eingestellt, wobei die Angaben in Prozent als Gewichtsprozent bezogen auf die Gesamtmasse des bereitgestellten Eiklars zu verstehen sind. Der Salzgehalt wurde dabei gemäß § 64 LFGB, L 05.02-1 eingestellt und der Trockenmassegehalt wurde dabei gemäß § 64 LFGB, L 05.00-12 eingestellt. Weitere gängige Bestimmungsmethoden für die Bestimmung des Trockenmassegehalts sowie für die Bestimmung des Salzgehalts sind dem Fachmann geläufig. Anschließend wird in einem Verfahrensschritt (c) der Trockenmassegehalt mittels Trinkwasser auf 10 % eingestellt, wobei die Angabe in Prozent als Gewichtsprozent bezogen auf die Gesamtmasse der Zusammensetzung zu verstehen ist, und der pH wird mittels Zitronensäure auf einen Wert im Bereich von 6,8 bis 7,0 eingestellt. Anschließend werden in einem Verfahrensschritt (d) 4,5 % Saccharose, 0,05 % Hefeextrakt, 1,3 % Zitrusfaser und 3,8 % Rapsöl hinzugegeben, wobei die Angabe in Prozent als Gewichtsprozent bezogen auf die Gesamtmasse der Zusammensetzung zu verstehen ist. Anschließend wird die erhaltene Mischung in einem Verfahrensschritt (e) homogenisiert bei 7000 U/min und anschließend bei 68 °C für 240 s pasteurisiert und nach dem Pasteurisieren auf eine Temperatur von 42 °C abgekühlt. Anschließend wird in einem Verfahrensschritt (f) eine Starterkultur von lyophilisiertem *Streptococcus thermophilus* in einer Konzentration von 0,01 % hinzugegeben, wobei die Angabe in Prozent als Gewichtsprozent bezogen auf die Gesamtmasse des bereitgestellten Eiklars zu verstehen ist. Zusätzlich zu der in Verfahrensschritt (f) hinzugegebenen Starterkultur wird eine Schutzkultur bestehend aus *Lactobacillus rhamnosus* in einer Konzentration von 0,001 % hinzugegeben, wobei die Angabe in Prozent als Gewichtsprozent bezogen auf die Gesamtmasse des bereitgestellten Eiklars zu verstehen ist. Anschließend wird in einem Verfahrensschritt (g) bei 42°C für 24 h fermentiert, wobei der pH während der gesamten Fermentationsdauer kontrolliert und unter pH 4,5 gehalten wurde.

### Texturierung 3:

Die aus dem Fermentationsverfahren 3 resultierende Zusammensetzung wurde in die Endverpackung abgefüllt und bei einer Temperatur im Bereich von 4 °C bis 8 °C gelagert. Optional kann das Produkt vor der Abfüllung durch die Zugabe von Fruchtpürees und/oder Aromen verfeinert werden.

Das Produkt ist gekennzeichnet durch eine stabile Emulsion und Textur, die als cremig bis dickflüssig beschrieben werden kann. Die Farbe wird dabei als weißlich bis cremig beschrieben. Durch den vorstehend beschriebenen Einsatz von Zitrusfaser ist kein zusätzlicher Einsatz von Stärke und/oder keine zusätzliche Ballaststoffanreicherung erforderlich.

## Patentansprüche

1. Zusammensetzung bestehend aus oder umfassend fermentiertes Eiklar, **dadurch gekennzeichnet, dass** die Zusammensetzung
- einen Proteingehalt im Bereich von 2 bis 20 Gew.-%, bezogen auf die Gesamtmasse der Zusammensetzung, sowie
- eine Viskosität im Bereich von 5 bis 4*10⁵ mPas und/oder
- eine gelartige und/oder cremige und/oder schaumige und/oder löffelbare Konsistenz
aufweist.

2. Zusammensetzung nach Anspruch 1, wobei die Zusammensetzung einen pH im Bereich von 4,0 bis 6,0, vorzugsweise von 4,1 bis 5,0 aufweist.

3. Zusammensetzung nach einem der vorangehenden Ansprüche, wobei die Zusammensetzung keine Milchsäurebakterien umfasst, die nicht der Gattung *Streptococcus* oder der Gattung *Lactobacillus* zugehörig sind, vorzugsweise keine Milchsäurebakterien, die nicht ausgewählt sind aus der Gruppe bestehend aus *Streptococcus thermophilus, Lactobacillus plantarum, Lactobacillus rhamnosus* und *Lactobacillus paracasei.*

4. Verfahren zur Herstellung einer Zusammensetzung bestehend aus oder umfassend fermentiertes Eiklar, vorzugsweise einer Zusammensetzung nach einem der Ansprüche 1 bis 3, umfassend die folgenden Schritte:
(a) Bereitstellen von Eiklar;
(b) Erhöhen des Trockenmassegehalts und/oder Einstellen des Salzgehalts des Eiklars, vorzugsweise mittels Ultrafiltration, sodass ein Trockenmassegehalt des Eiklars im Bereich von 5 bis 25 Gew.-% und/oder ein Salzgehalt des Eiklars im Bereich von 0,01 bis 0,45 Gew.-%, jeweils bezogen auf die Gesamtmasse des Eiklars, erreicht wird;
(c) optional: Einstellen
des Trockenmassegehalts des Eiklars durch Hinzufügen einer Flüssigkeit, vorzugsweise Trinkwasser, auf einen Bereich von 5 bis 15 Gew.-%, bezogen auf die Gesamtmasse des Eiklars,
und/oder
des pH des Eiklars, vorzugsweise mit Zitronensäure, auf einen pH im Bereich von 5,5 bis 8,0;
(d) optional: Hinzufügen einer oder mehrerer Kohlenhydratquelle(n) zu dem Eiklar;
(e) optional: Reduktion der mikrobiologischen Belastung des Eiklars;
(f) Hinzufügen einer Fermentationskultur zum Eiklar;
(g) Fermentieren des Eiklars, sodass ein fermentiertes Eiklar entsteht;
(h) optional: Hinzufügen von einem oder mehreren weiteren Bestandteilen, vorzugsweise wobei eine Zusammensetzung nach einem der Ansprüche 1 bis 3 erhalten wird.

5. Verfahren nach Anspruch 4, wobei das Verfahren folgenden zusätzlichen Schritt enthält:
(i) Texturieren des fermentierten Eiklars (FE), sodass ein texturiertes und fermentiertes Eiklar (TFE) entsteht, vorzugsweise eine Zusammensetzung nach einem der Ansprüche 1 bis 3,
wobei das Texturieren gemäß Verfahrensschritt (i) einen oder mehrere der folgenden Teilschritte in beliebiger Reihenfolge oder der hier angegebenen Reihenfolge umfasst:
(i.i) Homogenisieren des fermentierten Eiklars mittels einer oder mehrerer mechanischer Methoden, vorzugsweise ausgewählt aus der Gruppe bestehend aus Dispersionshomogenisierung, Hochdruck-Homogenisierung, Rühren und Scheren, Ultraschall, Sprühen, Pumpen;
(i.ii) Regulieren der Temperatur des fermentierten Eiklars, vorzugsweise durch eine oder mehrere Methode(n) ausgewählt aus der Gruppe bestehend aus Erwärmen, Kochen, Ultrahocherhitzen, ohmschen Erhitzen und Kühlen oder nicht-thermischen Verfahren, wie Hochdruck, Ultraschall, ohmschen Erhitzen, Plasma und gepulsten elektrischen Feldern.

6. Verfahren nach einem der Ansprüche 4 oder 5, wobei das Texturieren gemäß Verfahrensschritt (i) einen oder mehrere der folgenden, ggf. zusätzlichen, Teilschritte in beliebiger Reihenfolge oder der hier angegebenen Reihenfolge umfasst:
(i.iii) Hinzufügen eines oder mehrerer Fette und/oder Öle, vorzugsweise eines oder mehrerer pflanzlicher und/ oder tierischer Fette und/oder Öle;
(i.iv) Hinzufügen eines oder mehrerer Hydrokolloide, vorzugweise ausgewählt aus der Gruppe bestehend aus nativen Stärken, physikalisch modifizierten Stärken, chemisch modifizierten Stärken, nativen Cellulosen, modifizierten Cellulosen, Pektinen, modifizierte Pektine, Chitosan, Fasern, Xanthan, Gellan, Curdlan, Agar, Alginat, Carrageenan, Johannisbrotkernmehl, Guarkernmehl, Inulin, Dextrane, Pullulane, Furcellaran, Kojakmehl, Tarakernmehl, Cassia und weitere pflanzliche Mehle (Flohsamenschalen, Chiasamen und/oder Auszüge daraus), Gelatine, Kollagene;
(i.v) Hinzufügen eines oder mehrerer Emulgatoren, vorzugsweise ausgewählt aus der Gruppe bestehend aus Polysorbate, pflanzliches Lecithin, tierisches Lecithin, Mono- und Diglyceride und/ oder deren Ester und/oder Salze von Speisefettsäuren, Alginate, Zuckerester, Zuckerglyceride und native und/oder modifizierte Pektine und/oder Cellulosen.

7. Verfahren nach einem der vorangehenden Ansprüche 5 bis 6, wobei der Verfahrensschritt (i) vor den Verfahrensschritten (f) und (g) durchgeführt wird, sodass ein texturiertes Eiklar entsteht und zu dem texturierten Eiklar eine Fermentationskultur, hinzugefügt wird, sodass ein modifiziertes texturiertes Eiklar entsteht und dieses modifizierte texturierte Eiklar fermentiert wird, sodass ein modifiziertes, texturiertes und fermentiertes Eiklar entsteht.

8. Verfahren nach einem der vorangehenden Ansprüche 4 bis 7, wobei das Hinzufügen einer Fermentationskultur gemäß Verfahrensschritt (f) derart erfolgt, dass eine Menge der Fermentationskultur von 0,05 Gew.-% oder weniger, vorzugsweise 0,02 Gew.-% oder weniger, vorzugsweise 0,01 Gew.-% oder weniger, vorzugsweise 0,001 Gew.-% oder weniger, jeweils bezogen auf die Gesamtmasse des Eiklars bzw. im Falle von Anspruch 7 des texturierten Eiklars, hinzugefügt wird.

9. Verfahren nach einem der vorangehenden Ansprüche 4 bis 8, wobei der Lysozymgehalt des bereitgestellten Eiklars auf 0,45 Gew.-% oder weniger, vorzugsweise 0,25 Gew.-% oder weniger, vorzugsweise 0,15 Gew.-% oder weniger, vorzugsweise 0,045 Gew.-% oder weniger, jeweils bezogen auf den Gesamtproteingehalt des in Schritt (a) bereitgestellten Eiklars, reduziert wird und/oder die Aktivität des in dem in Schritt (a) bereitgestellten Eiklar enthaltenen Lysozyms reduziert wird.

10. Verfahren nach einem der vorangehenden Ansprüche 5 bis 9, wobei durch das Texturieren gemäß Verfahrensschritt (i) eine Viskosität im Bereich von 5 bis 4*10⁵ mPas und/oder eine gelartige und/oder cremige und/oder schaumige und/oder löffelbare Konsistenz eingestellt wird.

11. Zusammensetzung bestehend aus oder umfassend fermentiertes Eiklar, vorzugsweise nach einem der Ansprüche 1 bis 3, hergestellt oder herstellbar durch ein Verfahren nach einem der Ansprüche 4 bis 10.

12. Lebensmittelzubereitung bestehend aus oder umfassend eine Zusammensetzung nach einem der Ansprüche 1 bis 3 oder nach Anspruch 11.

13. Verwendung der Zusammensetzung nach einem der vorangehenden Ansprüche 1 bis 3 oder nach Anspruch 11 als Lebensmittelzubereitung und/oder als Bestandteil einer Lebensmittelzubereitung.

14. Lebensmittelzubereitung nach Anspruch 12 oder Verwendung nach Anspruch 13, wobei die Lebensmittelzubereitung 15,0 Gew.-% oder weniger, vorzugsweise 5,0 Gew.-% oder weniger, vorzugsweise gar kein Casein, enthält
und/oder
wobei die Lebensmittelzubereitung 5,0 Gew.-% oder weniger, vorzugsweise 2,0 Gew.-% oder weniger, vorzugsweise gar kein Molkenprotein, enthält,
wobei die Angaben in Gew.-% jeweils bezogen sind auf die Gesamtmasse der Lebensmittelzubereitung.

15. Lebensmittelzubereitung nach einem der Ansprüche 12 oder 14 oder Verwendung nach einem der Ansprüche 13 oder 14, wobei die Lebensmittelzubereitung und/oder das fermentierte und/oder texturierte Eiklar in cremiger und/oder gelartiger und/oder flüssiger und/ oder schaumiger und/oder getrockneter und/oder gefriergetrockneter und/oder sprühgetrockneter und/oder gefrorener Form, vorzugsweise als Pulver und/oder Granulat und/oder Agglomerate (verkapselt oder unverkapselt) und/oder Eicreme, vorliegt.
